# EUROPÄISCHE PATENTSCHRIFT

(11) **EP 0 748 852 B1**
(45) Veröffentlichungstag und Bekanntmachung des Hinweises auf die Patenterteilung: **12.12.2001**
(21) Anmeldenummer: 96108308.6
(22) Anmeldetag: 24.05.1996
(51) Int. Cl.: C09B 69/10, C09K 19/24, C09K 19/26, C09K 19/32, C09K 19/20

(54) **Photovernetzbare flüssigkristalline Farbstoffe**
Photocrosslinkable liquid crystalline dyestuffs
Colorants photoréticulables ayant des propriétés de cristaux liquides

(30) Priorität: 07.06.1995 CH 166395
(43) Veröffentlichungstag der Anmeldung: 18.12.1996
(73) Patentinhaber: Rolic AG, 6301 Zug (CH)
(72) Erfinder: Kelly, Stephen, Beverly HU17 8XA, East Yorkshire (GB)
(74) Vertreter: Groner, Manfred

(56) Entgegenhaltungen:
- EP-A- 0 538 773
- EP-A- 0 675 186
- EP-A- 0 699 731
- EP-A- 0 700 981

## Beschreibung

Die vorliegende Erfindung betrifft photovernetzbare flüssigkristalline Verbindungen mit einem Chromophor, flüssigkristalline Gemische, die solche Verbindungen enthalten, sowie deren Verwendung im vernetzten Zustand als optische Bauelemente.

Durch geeignete Orientierungsschichten oder in einem Feld können photovernetzbare Flüssigkristalle, welche mit einer geeigneten Menge eines Photoinitiators versehen sind, auf einem Substrat oder in einer Zelle orientiert werden und dann in diesem Zustand durch Bestrahlen mit Licht einer geeigneten Wellenlänge vernetzt werden. Die dadurch erzeugte Struktur bleibt auch bei hohen Temperaturen erhalten. So lassen sich optische Bauelemente, wie zum Beispiel Wellenleiter, optische Gitter und Filter, piezoelektrische Zellen und Zellen mit nicht-linearen optischen (NLO) Eigenschaften, usw. herstellen. Solche optische Bauelemente können zum Beispiel in Frequenzverdoppelung (SHG) oder in Farbfilter verwendet werden.

Weitere Eigenschaften, wie beispielsweise die Doppelbrechung, der Brechungsindex, die Transparenz, usw. müssen je nach Anwendungsgebiet unterschiedlichen Anforderungen genügen. Beispielsweise sollten Materialien für optische Filter eine starke Absorption in einer Richtung senkrecht zur Filteroberfläche aufweisen.

Die photovernetzbaren Flüssigkristalle müssen eine gute chemische und thermische Stabilität, gute Löslichkeit in gängigen Lösungsmitteln und eine gute Stabilität gegenüber elektrischen Feldern und elektromagnetischer Strahlung aufweisen. Sie sollten in einem Temperaturbereich von etwa 25°C bis etwa +100°C, insbesondere von etwa 25°C bis etwa +80°C eine geeignete Mesophase besitzen. Ausserdem sollten sie für die oben genannten Anwendungen eine starke Absorption im erwünschten Wellenlängenbereich aufweisen.

Da Flüssigkristalle in der Regel als Mischungen mehrerer Komponenten zur Anwendung gelangen, ist es wichtig, dass die Komponenten untereinander gut mischbar sind.

Flüssigkeitskristalline Mischungen, welche für Frequenzverdoppelung oder als optische Filter mit einer starken Absorption bei einer bestimmten Wellenlänge eingesetzt werden, enthalten dichroitische Farbstoffe, welche meist selbst nicht flüssigkristallin sind. Mischungen enthaltend solche Farbstoffe können auf verschiedenen Prinzipien beruhen. So werden beispielsweise Farbstoffe zu den Flüssigkeitskristallen gemischt, dadurch werden jedoch die Phasenübergangstemperaturen stark herabgesetzt, so dass nur sehr beschränkte Mengen Farbstoff zugefügt werden können. Eine weitere Methode besteht darin, Farbstoffe zu Mischungen von photovernetzten Flüssigkristallen hinzu zufügen, dabei besteht jedoch die Gefahr, dass der nicht vernetzte Teil (Farbstoff) relaxiert und so die Absorption mit der Zeit abgeschwächt wird; ausserdem ist die Löslichkeit solcher Farbstoffe in photovernetzten Flüssigkristallen in der Regel durch Phasentrennung und/oder Aggregatbildung beschränkt.

Es stellte sich somit die Aufgabe, insbesondere für SHG Anwendungen, Mischungen zur Verfügung zu stellen, welche sich sowohl durch eine hohe Konzentration des Chromophors als auch durch eine gute Stabilität der Orientierung auszeichnen.

Durch Einbinden von Chromophoren in Netzwerke werden hohe Konzentrationen der aktiven Zusätze erreicht, ohne dass Phasentrennung oder Aggregatbildung eintritt und ohne dass die Langzeitstabilität der photovernetzten Flüssigkristalle beeinträchtigt wird. Darüber hinaus lassen sich die Chromophore im elektrischen Feld senkrecht zur optischen Achse der vorpolymerisierten Polymere orientieren; dies führt zu einer hohen SHG Effizienz.

Die vorliegende Erfindung stellt nun Verbindungen, die in hervorragender Weise als Einzelkomponenten oder als Komponenten solcher Flüssigkristall-Mischungen geeignet sind, zur Verfügung. Gegenstand der vorliegenden Erfindung sind Verbindungen der allgemeinen Formel 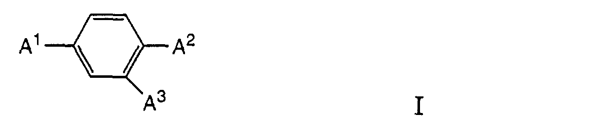 worin
- A¹ und A²: je einen vernetzbaren, mesogenen Rest; und
- A³: einen dichroitischen Rest darstellen.

Da die erfindungsgemässen Verbindungen der Formel I oder deren Mischungen oft eine Mesophase aufweisen, können sie vor dem Vernetzen durch Anlegen eines elektrischen oder magnetischen Feldes orientiert werden. Dabei kann eine einheitliche Schicht erzeugt werden.

Vorzugsweise bedeuten die mesogen Reste A¹ und A² je einen Rest der allgemeinen Formel 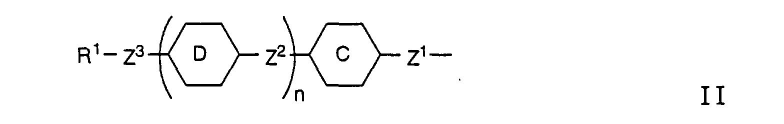 worin
- Ringe C und D: unabhängig voneinander gegebenenfalls mit Halogen, Methyl und/oder Cyano substituiertes 1,4-Phenylen oder Pyridin-2,5-diyl, Pyrimidin-2,5-diyl, trans-1,4-Cyclohexylen oder trans-1,3-Dioxan-2,5-diyl;
- Z¹: -CH₂CH₂-, -CH₂O-, -COO-, -OOC-, -(CH₂)₄- oder -(CH₂)₃O-;
- Z²: eine Einfachbindung, -CH₂CH₂-, -CH₂O-, -OCH₂-, -COO-, -OOC-, -(CH₂)₄-, -O(CH₂)₃- oder -(CH₂)₃O-;
- Z³: -(CY₂)ₘ-, -O(CY₂)ₘ-, -(CY₂)ₘO-, -(CY₂)ₘCOO-, -(CY₂)ₘOOC-, -(Si[(CH₃)₂]O)ₘ-, -OCH₂(Si[(CH₃)₂]O)ₘSi[(CH₃)₂]CH₂O-, oder -NHCH₂(Si[(CH₃)₂]O)ₘSi[(CH₃)₂]CH₂NH-;
- Y: Wasserstoff oder Fluor;
- n: 0 oder 1;
- m: eine ganze Zahl von 1 bis 16; und
- R¹: eine vernetzbare Gruppe wie Ethylen, Acrylat, Methacrylat, 2-Chloracrylat, 2-Phenylacrylat, Acryloylphenylen, Acrylamid, Methacrylamid, 2-Chloracrylamid, 2-Phenylacrylamid, Epoxy, Itaconsäureester, Vinylether, Vinylester, Styrol-Derivate, Siloxane, Ethylenimin-Derivate, Maleinsäure-Derivate, Fumarsäure-Derivate oder ein gegebenenfalls mit Methyl, Methoxy, Cyano und/oder Halogen substituiertes Zimtsäure-Derivat, bedeuten.

Besonders bevorzugt werden Verbindungen der Formel I, worin die beiden mesogenen Reste A¹ und A² die gleiche Bedeutung haben. Ganz besonders bevorzugt werden Reste A¹ und A² der Formel II, worin die Ringe C und D unabhängig voneinander unsubstituiertes oder mit Fluor substituiertes 1,4-Phenylen, Pyridin-2,5-diyl oder Pyrimidin-2,5-diyl bedeuten. Z¹ bedeutet in den Resten der Formel II vorzugsweise -CH₂O-, -COO- oder -OOC-; Z² vorzugsweise eine Einfachbindung, -CH₂CH₂-, -CH₂O-, OCH₂-, -COO- oder -OOC-; Z³ vorzugsweise -(CY₂)ₘ-, -(CY₂)ₘO-, -(CY₂)ₘCOO- oder -(CY₂)ₘOOC-; und Y vorzugsweise Wasserstoff.

Vorzugsweise bedeutet die vernetzbare Gruppe R¹ Acrylat, Methacrylat, 2-Chloracrylat, 2-Phenylacrylat, Acryloylphenylen, Acrylamid, Methacrylamid, 2-Phenylacrylamid, Epoxy, Vinylether, Vinylester, Styrol-Derivate, Maleinsäure-Derivate oder Fumarsäure-Derivate. Es sind dies Reste, welche nach Orientieren der Verbindungen der Formel I in einem Feld photochemisch vernetzt werden können. Besonders bevorzugte Gruppen R¹ sind Acrylat, Methacrylat, Vinylether und Epoxy.

Der dichroitische Rest A³ bedeutet vorzugsweise einen Rest der allgemeinen Formel 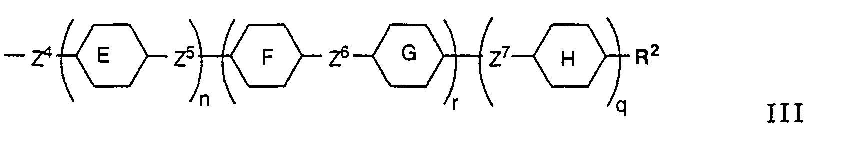 worin
- Ringe E und H: unabhängig voneinander gegebenenfalls mit Halogen, Methyl und/oder Cyano substituiertes 1,4-Phenylen, oder Pyridin-2,5-diyl, Pyrimidin-2,5-diyl, trans-1,4-Cyclohexylen oder trans-1,3-Dioxan-2,5-diyl;
- Ring F: gegebenenfalls mit Halogen, Methyl, und/oder Cyano substituiertes 1,4-Phenylen, oder Pyridin-2,5-diyl oder Pyrimidin-2,5-diyl;
- Ring G: gegebenenfalls mit Halogen, Methyl, Dimethylamino, Amino, Nitro und/oder Cyano einfach oder mehrfach substituiertes 1,4-Phenylen, oder Pyridin-2,5-diyl, Pyrimidin-2,5-diyl, 1,4-Naphthylen, 2,6-Naphthylen, 2,5-Pyrazoldiyl, 2,5-Thiazoldiyl, 2,5-Benzthiazoldiyl, 2,5-Imidazoldiyl, 2,5-Pyrroldiyl oder 2,5-Thiophendiyl;
- Z⁴: -CH₂CH₂-, -CH₂O-, -COO-, -OOC-, -(CH₂)₄-, -(CH₂)₃O-, -COO(CH₂)ₚ- oder -COO(CH₂)ₚO-;
- Z⁵ und Z⁷: unabhängig voneinander eine Einfachbindung, -CH₂CH₂-, -CH₂O-, -OCH₂-, -COO-, -OOC-, -(CH₂)₄-, -O(CH₂)₃- oder-(CH₂)₃O-;
- Z⁶: -N=N-, -N(O)=N-, -CH=CH- oder -CH=N-;
- n und q: je 0 oder 1;
- p: eine ganze Zahl von 1 bis 16;
- r: 0, 1 oder 2; und
- R²: Wasserstoff, Halogen, Cyano, -CH=CHNO₂, -CH=CHCN, -CH=C(CN)₂, Nitro, eine Dialkylamino- oder Cyclobutylamino-Gruppe, oder eine gegebenenfalls mit Methoxy, Cyano und/oder Halogen substituierte Alkyl, Alkoxy- oder Alkanoyloxy-Gruppe bedeuten, mit der Massgabe, dass, wenn r = 0 ist, R² einen substituierten Anthrachinon-Rest der allgemeinen Formel 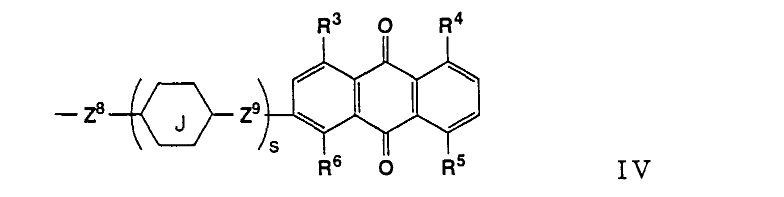
bedeutet, worin
- Ring J: gegebenenfalls mit Halogen, Methyl und/oder Cyano substituiertes 1,4-Phenylen, oder Pyridin-2,5-diyl, Pyrimidin-2,5-diyl, trans-1,4-Cyclohexylen oder trans-1,3-Dioxan-2,5-diyl;
- Z⁸: -CH₂CH₂-, -CH₂O-, -COO-, -OOC-, -(CH₂)₄-, -(CH₂)₃O-, -COO(CH₂)ₚ- oder -COO(CH₂)ₚO-;
- Z⁹: eine Einfachbindung, -COO(CH₂)ₚN(CH₃)-, -COO(CH₂)ₚNH-, -CH₂O-, -OCH₂-, -COO-, -OOC- oder -NH-;
- s: 0 oder 1;
- p: eine ganze Zahl von 1 bis 16; und
- R³, R⁴, R⁵ und R⁶: unabhängig voneinander Wasserstoff, Halogen, Cyano, -CH=CHNO₂, -CH=CHCN, -CH=C(CN)₂, Nitro, Hydroxy, eine Dialkylamino- oder Cyclobutylamino-gruppe oder eine gegebenenfalls mit Methyl, Methoxy, Cyano und/oder Halogen substituierte Alkyl, Alkoxy- oder Alkanoyloxy-gruppe, bedeuten.

Der dichroitische Rest A³ bedeutet vorzugsweise auch einen Rest der allgemeinen Formel 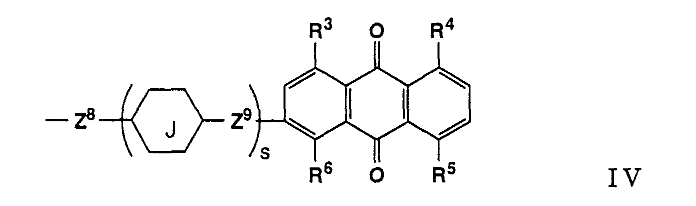 worin
- Ring J: gegebenenfalls mit Halogen, Methyl und/oder Cyano substituiertes 1,4-Phenylen, oder Pyridin-2,5-diyl, Pyrimidin-2,5-diyl, trans-1,4-Cyclohexylen oder trans-1,3-Dioxan-2,5-diyl;
- Z⁸: -CH₂CH₂-, -CH₂O-, -COO-, -OOC-, -(CH₂)₄-, -(CH₂)₃O-, -COO(CH₂)ₚ- oder -COO(CH₂)ₚO-;
- Z⁹: eine Einfachbindung, -COO(CH₂)ₚN(CH₃)-, -COO(CH₂)ₚNH-, -CH₂O-, -OCH₂-, -COO-, -OOC- oder -NH-;
- s: 0 oder 1;
- p: eine ganze Zahl von 1 bis 16; und
- R³, R⁴, R⁵ und R⁶: unabhängig voneinander Wasserstoff, Halogen, Cyano, -CH=CHNO₂, -CH=CHCN, -CH=C(CN)₂, Nitro, Hydroxy, eine Dialkylamino- oder Cyclobutylamino-gruppe oder eine gegebenenfalls mit Methyl, Methoxy, Cyano und/oder Halogen substituierte Alkyl, Alkoxy- oder Alkanoyloxy-gruppe, bedeuten.

Die oben verwendeten Ausdrücke werden im folgenden erläutert:

"Halogen" bedeutet Fluor, Chlor oder Brom, insbesondere Fluor.

"Gegebenenfalls mit Halogen, Methyl und/oder Cyano substituiertes 1,4-Phenylen" umfasst in der vorliegenden Erfindung 1,4-Phenylen oder substituiertes 1,4-Phenylen, wie beispielsweise 2- bzw. 3-Fluor-1,4-phenylen, 2,3-Difluor-1,4-phenylen, 2,6- bzw. 3,5-Difluor-1,4-phenylen, 2- bzw. 3-Chlor-1,4-phenylen, 2,3-Dichlor-1,4-phenylen, 2,6- bzw. 3,5-Dichlor-1,4-phenylen, 2-bzw. 3-Brom-1,4-phenylen, 2- bzw. 3-Methyl-1,4-phenylen, 2- bzw. 3-Cyano-1,4-phenylen und dergleichen.

"Gegebenenfalls mit Halogen, Methyl, Dimethylamino, Amino, Nitro und/oder Cyano einfach oder mehrfach substituiertes 1,4-Phenylen, " umfasst in der vorliegenden Erfindung zusätzlich zu den oben aufgezählten Ringen auch 2- bzw. 3-Nitro-1,4-phenylen, 2- bzw. 3-Dialkylamino-1,4-phenylen und dergleichen.

"Dialkylamino-Gruppe" umfasst Dimethyl-, Diethyl-, Dipropyl- und Diisopropylamino-Gruppen.

"Gegebenenfalls mit Methoxy, Cyano und/oder Halogen substituierte Alkyl-, Alkoxy- oder Alkanoyloxy-Gruppe" umfasst im Rahmen der vorliegenden Erfindung Gruppen, worin der Alkylrest geradkettig oder verzweigt sein kann und vorzugsweise 1 bis 12 Kohlenstoffatome hat. Die Gruppen können mit Methoxy, Cyano und/oder Fluor, Chlor oder Brom einfach oder mehrfach substituiert sein. Ganz besonders bevorzugte Gruppen sind Methyl, Ethyl, Propyl, Butyl, Pentyl, Methoxy, Ethoxy, Propyloxy, Butoxy, Acyloxy, Propanoyloxy, Butanoyloxy und dergleichen.

Der Mesophasen-Typ der erfindungsgemässen Verbindungen kann durch Variation der Ringe in den mesogenen Seitenketten A¹ und A² beeinflusst werden. So haben aromatische Ringe, wie Phenylen, die Tendenz smektische Phasen zu erzeugen, während gesättigte Ringe, wie trans-1,4-Cyclohexylen oder trans-1,3-Dioxan-2,5-diyl, nematische Tendenzen fördern. Vorzugsweise bedeuten die mesogenen Reste A¹ und A² einen Rest der Formel II, worin n = 0 ist, wie beispielsweise 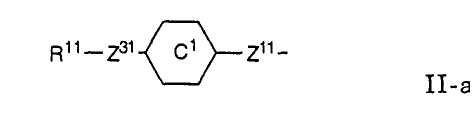 worin
- Ring C¹: ein gegebenenfalls mit Fluor substituiertes 1,4-Phenylen;
- Z¹¹: -CH₂CH₂-, -CH₂O-, -COO-, -OOC-, -(CH₂)₄- oder -(CH₂)₃O-;
- Z³¹: -(CH₂)_{m'}-, -(CH₂)_{m'}O-, -(CH₂)_{m'}COO- oder -(CH₂)_{m'}OOC-;
- m': eine ganze Zahl von 4 bis 12; und
- R¹¹: Acrylat, Methacrylat, Vinylether oder Epoxy bedeuten.

Vorzugsweise bedeutet der dichroitische Rest A³ einen Rest der allgemeinen Formel 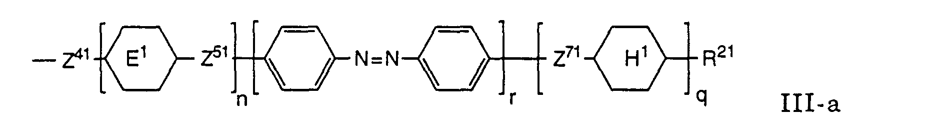 oder 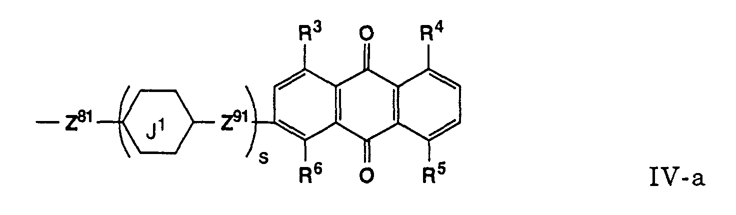 worin
- Ringe E¹ und H¹: ein gegebenenfalls mit Fluor substituiertes 1,4-Phenylen;
- Z⁴¹: -COO(CH₂)_{p'}- oder -COO(CH₂)_{p'}O-;
- Z⁵¹ und Z⁷¹: unabhängig voneinander eine Einfachbindung, -CH₂CH₂-, -CH₂O-, -COO- oder -OOC-;
- n, q: 0 oder 1;
- r: 1;
- p': eine ganze Zahl von 4 bis 12 ist;
- R²¹: Nitro oder Dimethylamino;
- Ring J¹: gegebenenfalls mit Fluor substituiertes 1,4-Phenylen oder trans-1,4-Cyclohexylen;
- Z⁸¹: -COO(CH₂)_{p'}- oder -COO(CH₂)_{p'}O-;
- Z⁹¹: eine Einfachbindung, -COO(CH₂)ₚN(CH₃)- oder -COO(CH₂)ₚNH- bedeuten;
- s: 0 oder 1; und
- R³, R⁴, R⁵, R⁶: und p die oben angegebenen Bedeutungen haben.

Ganz besonders bevorzugt sind Verbindungen der allgemeinen Formel 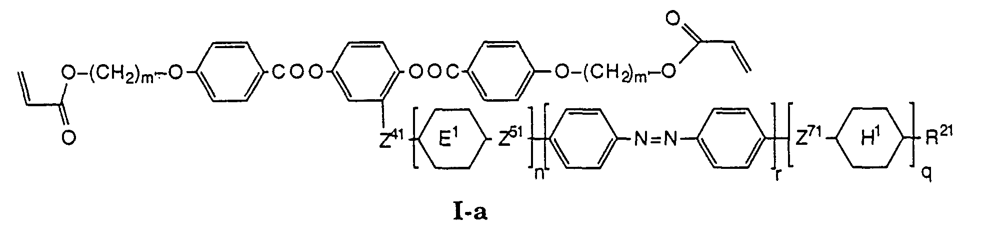 worin r = 1; R²¹ Nitro; Z⁴¹ -COO(CH₂)_{p'}O- bedeuten; und die übrigen Symbole die obenangegebenen Bedeutungen haben. Besonders bevorzugte Verbindungen der Formel I-a sind diejenigen, worin q = 0 ist.

Die Verbindungen der Formel I, worin A¹ und A² die gleiche Bedeutung haben, sind synthetisch sehr einfach zugänglich und können beispielsweise analog zu den in den Schemata 1 und 2 aufgezeigten Methoden hergestellt werden. So können in an sich bekannter Weise dichroitische Alkohole (2) bzw. (6) mit bis[2,5-bis[4-(ω-acryloyloxyalkyloxy)]phenylcarboxy]benzoesäuren (1) bzw. (7) umgesetzt werden. Diese Veresterung kann beispielsweise in Gegenwart von N,N'-Dicyclohexylcarbodiimid und 4-(Dimethylamino)pyridin in Dichlormethan oder einem anderen geeigneten Lösungsmittel wie z.B. Chloroform erfolgen. Die dichroitischen Alkohole sind bekannt oder können beispielsweise aus dem Veresterungsprodukt von 4-Hydroxybenzaldehyd (3) und einer, einen Chromophor enthaltenden, Benzoesäure (4) durch Reduktion des Aldehyds (5) mit Natriumborhydrid hergestellt werden.

Verbindungen der Formel I, worin A¹ und A² verschieden sind, können ausgehend von asymmetrischen 2-[4-(ω-Acryloyloxyalkyloxy)phenylcarboxy]-5- [4-(ω-acryloyloxyalkyloxy)phenylcarboxy]benzoesäuren hergestellt werden. Diese können beispielsweise durch Monoveresterung von 2,5-Dihydroxybenzaldehyd mit einer 4-(ω-Acryloyloxyalkyloxy)benzoesäure zum Monoester und anschliessender Veresterung mit einer anderen 4-(ω-Acryloyloxyalkyloxy)benzoesäure zum Diester hergestellt werden. Oxidation mit Jones' Reagenz ergibt die entsprechende asymmetrische 2-[4-(ω-Acryloyloxyalkyloxy)phenylcarboxy]-5-[4-(ω-acryloyloxyalkyloxy)]phenylcarboxy]benzoesäure. Die Ausgangsmaterialien sind bekannt und z.T. im Handel erhältlich.

In den Schemata haben die Symbole die obengenannten Bedeutungen.

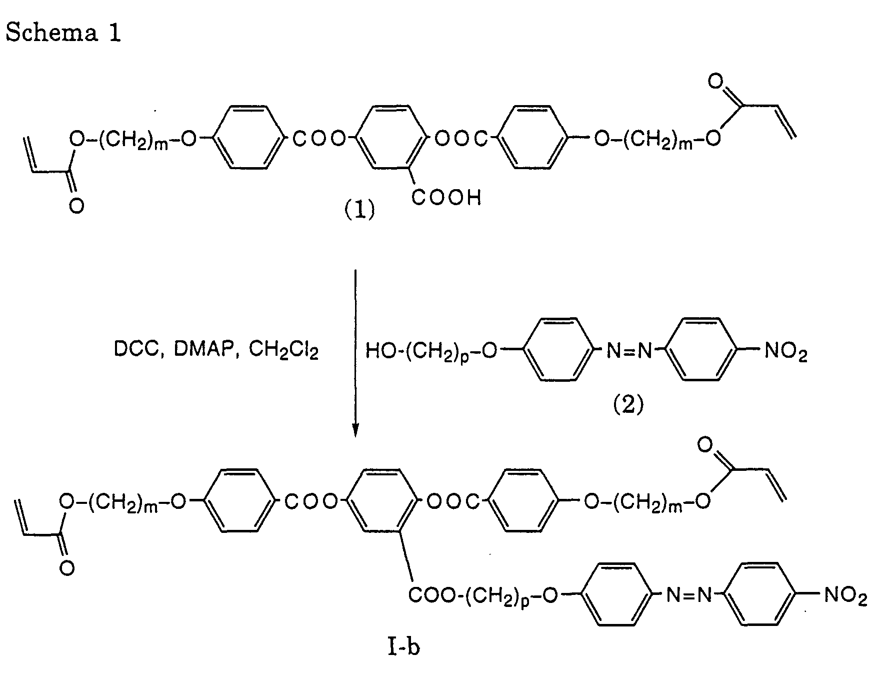

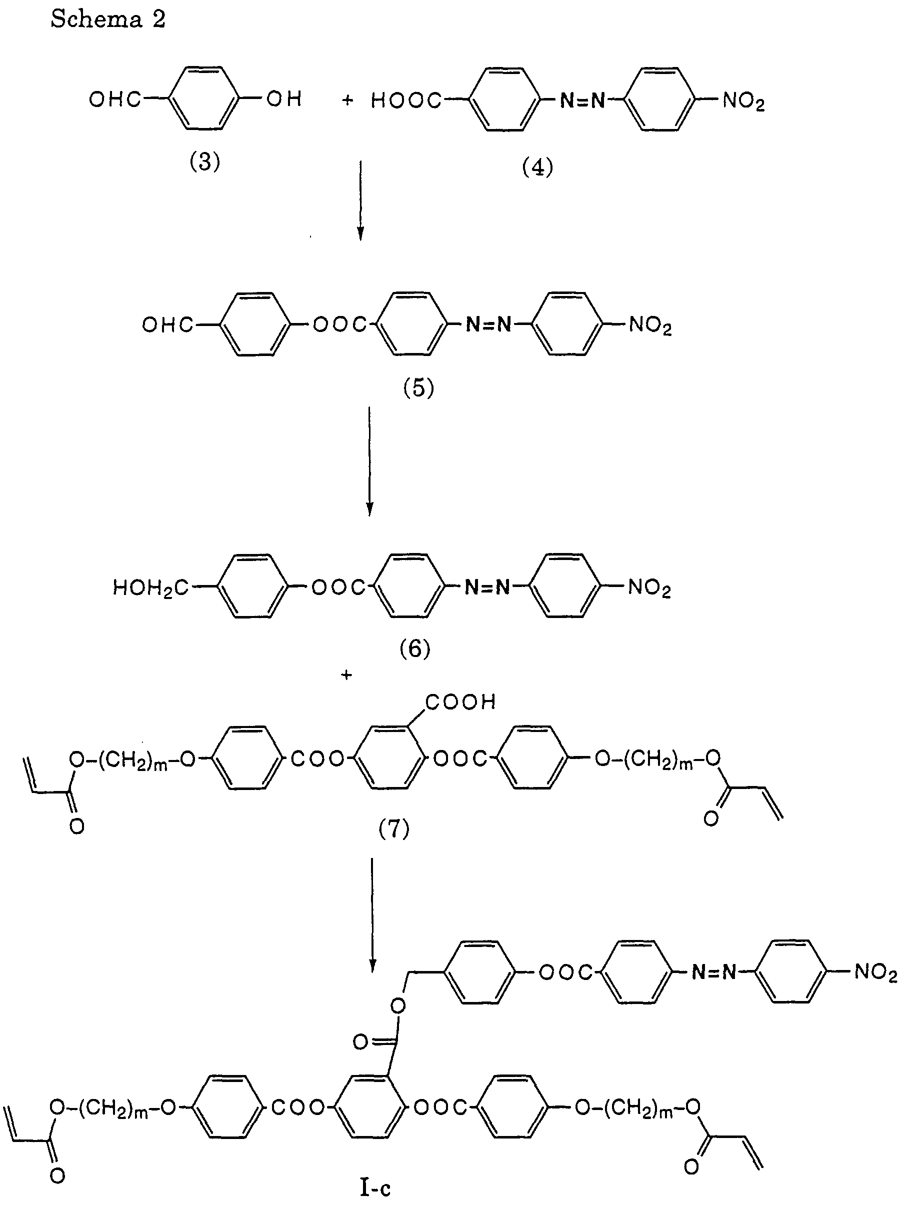

Eine kleine Menge BHT (2, 6-Di-tert.-butyl-4-methyl-phenol/"Butylhydroxytoluol") wird jeder Stufe beigemischt, um unerwünschtes thermisches Vernetzen zu unterbinden.

Die Verbindungen der Formeln I können als reine Verbindungen, oder in Form von Gemischen untereinander und/oder mit anderen Flüssigkristallkomponenten verwendet werden.

Die erfindungsgemässen flüssigkristallinen Gemische enthalten mindestens 2 Komponenten, wovon mindestens eine Komponente eine Verbindung der Formel I ist. Eine zweite und gegebenenfalls weitere Komponenten können weitere Verbindungen der Formel I oder andere, bekannte flüssigkristalline Verbindungen mit einer photovernetzbaren Gruppe sein. Es können auch eine oder mehrere chirale Komponenten im Gemisch enthalten sein.

Aufgrund der guten Löslichkeit der Verbindungen der Formel I und aufgrund ihrer guten Mischbarkeit untereinander kann der Anteil an Verbindungen der Formel I in den erfindungsgemässen Gemischen hoch sein und bis 100 Gew.-% betragen.

Vorzugsweise enthalten die erfindungsgemässen Gemische neben einer oder mehreren Verbindungen der Formel I eine oder mehrere Verbindungen aus der Gruppe der Verbindungen der allgemeinen Formeln 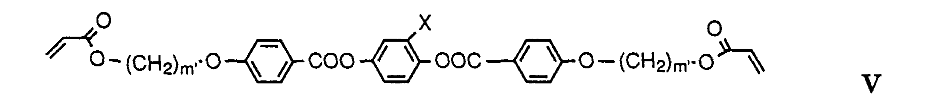 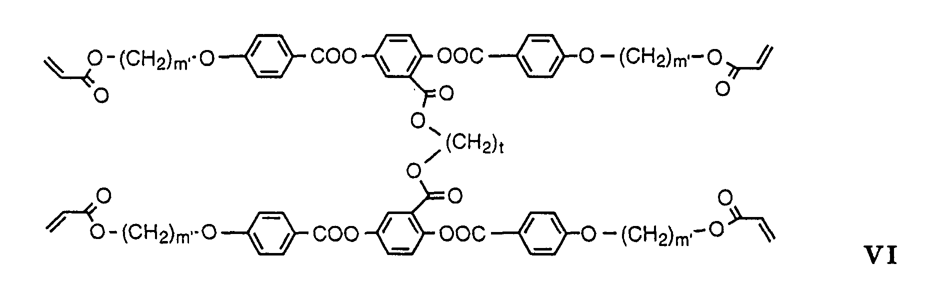 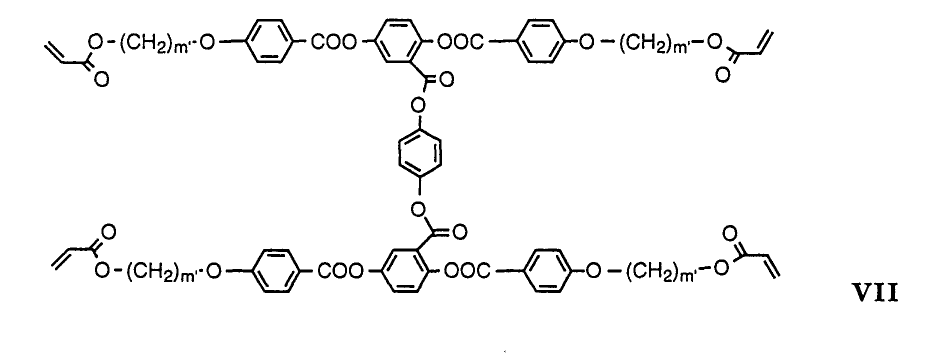 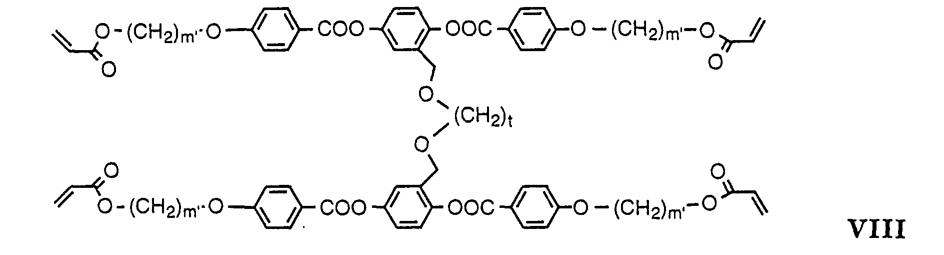 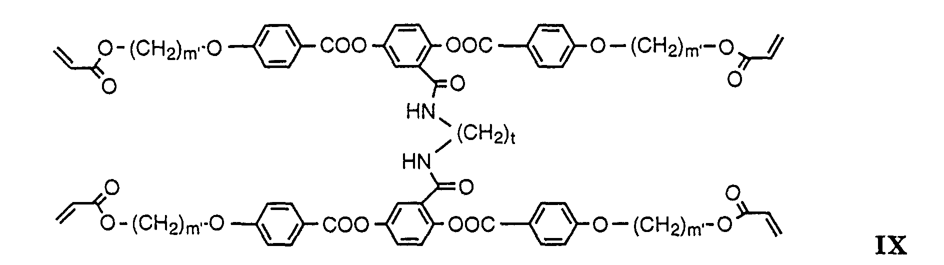 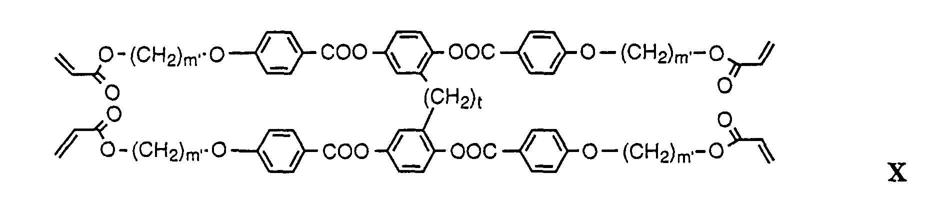 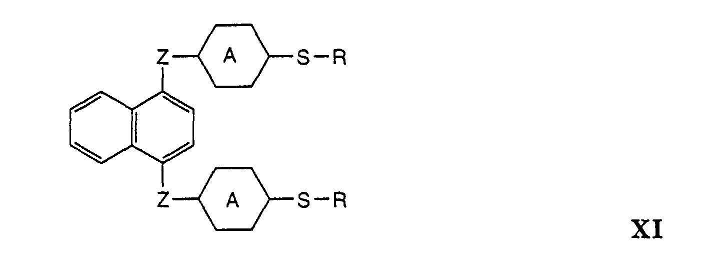 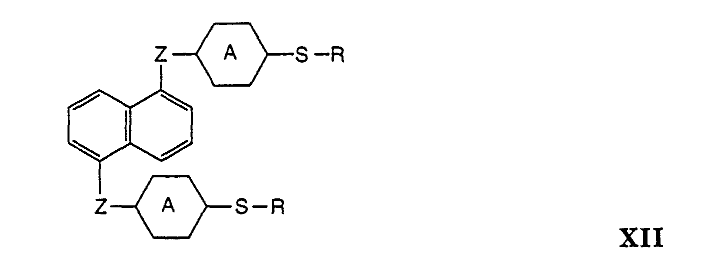 worin
- X: Wasserstoff, Fluor, Chlor, Brom oder Methyl;
- m': eine ganze Zahl von 4 bis 12;
- t: eine ganze Zahl von 2 bis 12;
- Z: -OCH₂- oder -OOC-;
- A: 1,4-Phenylen oder 2- bzw. 3-Fluor-1,4-phenylen;
- S: -(CH₂)_{m'} - oder -(CH₂)_{m'}O-; und
- R: Acrylat, Methacrylat, Vinylether oder Epoxy bedeuten.

Die Herstellung der Verbindungen der Formel I sowie flüssigkristalline Gemische enthaltend diese Verbindungen werden durch die folgenden Beispiele weiter veranschaulicht. C bedeutet eine kristalline, S eine smektische, N eine nematische und I die isotrope Phase.

### Beispiel 1

Zu einer Lösung von 0,5 g 2,5-bis[4-(6-Acryloyloxyhexyloxy)phenylcarboxy]benzoesäure, 0,25 g 6-[4-(4-Nitrophenylazo)phenoxy]hexanol und 0,04 g 4-Dimethylaminopyridin (DMAP) in 25 ml Dichlormethan wurde unter Rühren bei Raumtemperatur 0,2 g N, N'-Dicyclohexyldicarbodiimid (DCC) gegeben. Das Reaktionsgemisch wurde über Nacht bei Raumtemperatur gerührt, auf 100 ml Wasser gegossen und dann dreimal mit je 50 ml Dichlormethan extrahiert. Die organischen Phasen wurden vereinigt, zweimal mit je 100 ml Wasser gewaschen, über Magnesiumsulfat getrocknet, filtriert und das Filtrat eingeengt. Chromatographische Reinigung des Rückstandes an Kieselgel mit Hexan/ Ethylacetat (Vol. 1:1) und zweimaliges Umkristallisieren der gemäss Dünnschichtchromatographie reinen Fraktionen aus Aceton ergab 0,4 g 6-[4-(4-Nitrophenylazo)phenoxy]hexyl 2,5-bis[4-(6-acryloyloxyhexyloxy)phenylcarboxy]benzoesäureester; Smp. (C-N) 72°C, Klp. (N-I) 127°C.

In analoger Weise können folgende Verbindungen hergestellt werden:
2- [4-(4-Nitrophenylazo)phenoxy] ethyl 2,5-bis[4-(6-acryloyloxyhexyloxy)phenylcarboxy]benzoesäureester; Smp. (C-N) 122°C, Klp. (N-I) 162°C.
3-[4-(4-Nitrophenylazo)phenoxy]propyl 2,5-bis[4-(6-acryloyloxyhexyloxy)phenylcarboxy]benzoesäureester.
4-[4-(4-Nitrophenylazo)phenoxy]butyl 2,5-bis[4-(6-acryloyloxyhexyloxy)phenylcarboxy]benzoesäureester; Smp. (C-N) 113°C, Klp. (N-I) 142°C.
5-[4-(4-Nitrophenylazo)phenoxy]pentyl 2,5-bis[4-(6-acryloyloxyhexyloxy)phenylcarboxy]benzoesäureester; Smp. (C-N) 98°C, Klp. (N-I) 104°C.
7-[4-(4-Nitrophenylazo)phenoxy]heptyl 2,5-bis[4-(6-acryloyloxyhexyloxy)phenylcarboxy]benzoesäureester.
8- [4-(4-Nitrophenylazo)phenoxy]octyl 2,5-bis [4-(6-acryloyloxyhexyloxy)phenylcarboxy]benzoesäureester; Smp. (C-N) 86°C, Klp. (N-I) 119°C.
9-[4-(4-Nitrophenylazo)phenoxy]nonyl 2,5-bis([4-(6-acryloyloxyhexyloxy)phenylcarboxy]benzoesäureester.
10-[4-(4-Nitrophenylazo)phenoxy] decyl 2,5-bis [4-(6-acryloyloxyhexyloxy)phenylcarboxy]benzoesäureester.
11-[4-(4-Nitrophenylazo)phenoxy]undecyl 2,5-bis [4-(6-acryloyloxyhexyloxy)phenylcarboxy]benzoesäureester.
12-[4-(4-Nitrophenylazo)phenoxy]dodecyl 2,5-bis[4-(6-acryloyloxyhexyloxy)phenylcarboxy]benzoesäureester.
2-[4-(4-Dimethylaminophenylazo)phenoxy]ethyl 2,5-bis[4-(6-acryloyloxyhexyloxy)phenylcarboxy]benzoesäureester; Smp. (C-N) 124°C, Klp. (N-I) 166°C.
3-[4-(4-Dimethylaminophenylazo)phenoxy]propyl 2,5-bis [4-(6-acryloyloxyhexyloxy)phenylcarboxy]benzoesäureester.
4-[4-(4-Dimethylaminophenylazo)phenoxy]butyl 2,5-bis[4-(6-acryloyloxyhexyloxy)phenylcarboxy]benzoesäureester; Smp. (C-N) 100°C, Klp. (N-I) 149°C.
5-[4-(4-Dimethylaminophenylazo)phenoxy]pentyl 2,5-bis([4-(6-acryloyloxyhexyloxy)phenylcarboxy]benzoesäureester; Smp. (C-N) 80°C, Klp. (N-I) 113°C.
6-[4-(4-Dimethylaminophenylazo)phenoxy]hexyl 2,5-bis[4-(6-acryloyloxyhexyloxy)phenylcarboxy]benzoesäureester; Smp. (C-N) 90°C, Klp. (N-I) 137°C.
7-[4-(4-Dimethylaminophenylazo)phenoxy]heptyl 2,5-bis[4-(6-acryloyloxyhexyloxy)phenylcarboxy]benzoesäureester.
8-[4-(4-Dimethylaminophenylazo)phenoxy]octyl 2,5-bis[4-(6-acryloyloxyhexyloxy)phenylcarboxy]benzoesäureester; Smp. (C-N) 98°C, Klp. (N-I) 131°C.
9-[4-(4-Dimethylaminophenylazo)phenoxy]nonyl 2,5-bis[4-(6-acryloyloxyhexyloxy)phenylcarboxy]benzoesäureester.
10-[4-(4-Dimethylaminophenylazo)phenoxy]decyl 2,5-bis[4-(6-acryloyloxyhexyloxy)]phenylcarboxy]benzoesäureester.
11-[4-(4-Dimethylaminophenylazo)phenoxy]undecyl 2,5-bis [4-(6-acryloyloxyhexyloxy)phenylcarboxy]benzoesäureester.
12-[4-(4-Dimethylaminophenylazo)phenoxy]dodecyl 2,5-bis [4-(6-acryloyloxyhexyloxy)phenylcarboxy]benzoesäureester.
6-[4-(4-Nitrophenylazoxy)phenoxy]hexyl 2,5-bis[4-(3-acryloyloxypropyloxy)phenylcarboxy]benzoesäureester.
6-[4-(4-Nitrophenylazoxy)phenoxy]hexyl 2,5-bis[4-(4-acryloyloxybutyloxy)phenylcarboxy]benzoesäureester.
6-[4-(4-Nitrophenylazoxy)phenoxy]hexyl 2,5-bis[4-(5-acryloyloxypentyloxy)phenylcarboxy]benzoesäureester.
6-[4-(4-Nitrophenylazoxy)phenoxy]hexyl 2,5-bis[4-(7-acryloyloxyheptyloxy)phenylcarboxy]benzoesäureester.
6-[4-(4-Nitrophenylazoxy)phenoxy]hexyl 2,5-bis [4-(8-acryloyloxyoctyloxy)phenylcarboxy]benzoesäureester.
6-[4-(4-Nitrophenylazoxy)phenoxy]hexyl 2,5-bis[4-(9-acryloyloxynonyloxy)phenylcarboxy]benzoesäureester.
6-[4-(4-Nitrophenylazoxy)phenoxy]hexyl 2,5-bis[4-(10-acryloyloxydecyloxy)phenylcarboxy]benzoesäureester.
6-[4-(4-Nitrophenylazoxy)phenoxy]hexyl 2,5-bis[4-(11-acryloyloxyundecyloxy)phenylcarboxy]benzoesäureester; Smp. (C-SA) 65°C, SA-N, 98°C, Klp. (N-I) 121°C.
6-[4-(4-Nitrophenylazoxy)phenoxy]hexyl 2,5-bis[4-(12-acryloyloxydodecyloxy)phenylcarboxy]benzoesäureester.
6-[4-(4-Dimethylaminophenylazoxy)phenoxy]hexyl 2,5-bis [4-(3-acryloyloxypropyloxy)phenylcarboxy] benzoesäureester.
6-[4-(4-Dimethylaminophenylazoxy)phenoxy]hexyl 2,5-bis[4-(4-acryloyloxybutyloxy)phenylcarboxy]benzoesäureester.
6-[4-(4-Dimethylaminophenylazoxy)phenoxy]hexyl 2,5-bis[4-(5-acryloyloxypentyloxy)phenylcarboxy]benzoesäureester.
6-[4-(4-Dimethylaminophenylazoxy)phenoxy]hexyl 2,5-bis[4-(7-acryloyloxyheptyloxy)phenylcarboxy]benzoesäureester.
6-[4-(4-Dimethylaminophenylazoxy)phenoxy]hexyl 2,5-bis [4-(8-acryloyloxyoctyloxy)phenylcarboxy] benzoesäureester.
6-[4-(4-Dimethylaminophenylazoxy)phenoxy]hexyl 2,5-bis[4-(9-acryloyloxynonyloxy)phenylcarboxy] benzoesäureester.
6-[4-(4-Dimethylaminophenylazoxy)phenoxy]hexyl 2,5-bis[4-(10-acryloyloxydecyloxy)phenylcarboxy]benzoesäureester.
6-[4-(4-Dimethylaminophenylazoxy)phenoxy]hexyl 2,5-bis[4-(11-acryloyloxyundecyloxy)phenylcarboxy]benzoesäureester.
6-[4-(4-Dimethylaminophenylazoxy)phenoxy]hexyl 2,5-bis[4-(12-acryloyloxydodecyloxy)phenylcarboxy]benzoesäureester.

### Beispiel 2

Zu einer Lösung von 0,6 g 2,5-bis[4-(6-acryloyloxyhexyloxy)phenylcarboxy]benzoesäure und 0,4 g (4-[4-(4-Nitrophenylazo)benzoyloxy]phenyl)methanol, 0,04 g 4-Dimethylaminopyridin in 20 ml Dichlormethan wird unter Rühren bei Raumtemperatur 0,2 g N, N'-Dicyclohexyldicarbodiimid gegeben. Das Reaktionsgemisch wird über Nacht bei Raumtemperatur gerührt, auf 100 ml Wasser gegossen und dann dreimal mit je 50 ml Dichlormethan extrahiert. Die organischen Phasen werden vereinigt, zweimal mit je 100 ml Wasser gewaschen, über Magnesiumsulfat getrocknet, filtriert und das Filtrat eingeengt. Chromatographische Reinigung des Rückstandes an Kieselgel mit Hexan/Aethylacetat (Vol. 1:1) und zweimaliges Umkristallisieren der gemäss Dünnschichtchromatographie reinen Fraktionen aus Aceton ergibt 0,4 g (4-[4-(4-Nitrophenylazo)benzoyloxy]phenyl)methyl 2,5-bis[4-(6-acryloyloxyhexyloxy)phenylcarboxy]benzoesäureester.

Das als Ausgangsmaterial verwendete (4-[4-(4-Nitrophenylazo)benzoyloxy]phenyl)methanol wird wie folgt hergestellt:
(a). Ein Gemisch von 0,13 g Natriumborhydrid und 15 ml Wasser wird tropfenweise bei 0°C mit einer Lösung von 0,8 g 4-[4-(4-Nitrophenylazo)benzoyloxy]benzaldehyd in 100 ml Dioxan versetzt. Das Reaktionsgemisch wird 60 Minuten bei 0°C und dann 10 Minuten bei Raumtemperatur gerührt, auf 100 ml Dichlormethan gegossen und zweimal mit je 100 ml Wasser gewaschen. Die wässrigen Phasen werden vereinigt, zweimal mit je 50 ml Dichlormethan extrahiert. Die organischen Phasen werden vereinigt, zweimal mit je 100 ml Wasser gewaschen, über Magnesiumsulfat getrocknet, die Suspension filtriert und das Filtrat eingeengt. Der Rückstand wird ohne weitere Reinigung in die nächste Stufe eingesetzt.
(b). Zu einer Lösung von 1,0 g 4-(4-Nitrophenylazo)benzoesäure und 0,3 g 4-Hydroxybenzaldehyd, 0,04 g 4-Dimethylaminopyridin in 20 ml Dichlormethan wird unter Rühren bei Raumtemperatur 0,6 g N, N'-Dicyclohexyldicarbodiimid gegeben. Das Reaktionsgemisch wird über Nacht bei Raumtemperatur gerührt, auf 100 ml Wasser gegossen und dann dreimal mit je 50 ml Dichlormethan extrahiert. Die organischen Phasen werden vereinigt, zweimal mit je 100 ml Wasser gewaschen, über Magnesiumsulfat getrocknet , filtriert und das Filtrat eingeengt. Chromatographische Reinigung des Rückstandes an Kieselgel mit Hexan/Aethylacetat (Vol. 1:1) und zweimaliges Umkristallisieren der gemäss Dünnschichtchromatographie reinen Fraktionen aus Ethanol ergibt 0,9 g 4-[4-(4-Nitrophenylazo)benzoyloxy]benzaldehyd.

In analoger Weise können folgende Verbindungen hergestellt werden:
(4-[4-(4-Nitrophenylazo)benzoyloxy]phenyl)methyl 2,5-bis[4-(7-acryloyloxyheptyloxy)phenylcarboxy]benzoesäureester.
(4-[4-(4-Nitrophenylazo)benzoyloxy]phenyl)methyl 2,5-bis[4-(8-acryloyloxyoctyloxy)phenylcarboxy]benzoesäureester.
(4-[4-(4-Nitrophenylazo)benzoyloxy] phenyl)methyl 2,5-bis [4-(9-acryloyloxynonyloxy)phenylcarboxy]benzoesäureester.
(4-[4-(4-Nitrophenylazo)benzoyloxy] phenyl)methyl 2,5-bis[4-(10-acryloyloxydecyloxy)phenylcarboxy]benzoesäureester.
(4-[4-(4-Nitrophenylazo)benzoyloxy]phenyl)methyl 2,5-bis[4-(11-acryloyloxyundecyloxy)phenylcarboxy]benzoesäureester.
(4-[4-(4-Nitrophenylazo)benzoyloxy]phenyl)methyl 2,5-bis[4-(12-acryloyloxydodecyloxy)phenylcarboxy]benzoesäureester.
(4-[4-(4-Dimethylphenylazo)benzoyloxy]phenyl)methyl 2,5-bis[4-(6-acryloyloxyhexyloxy)phenylcarboxy]benzoesäureester.
(4-[4-(4-Dimethylphenylazo)benzoyloxy]phenyl)methyl 2,5-bis[4-(7-acryloyloxyheptyloxy)phenylcarboxy]benzoesäureester.
(4-[4-(4-Dimethylphenylazo)benzoyloxy]phenyl)methyl 2,5-bis[4-(8-acryloyloxyoctyloxy)phenylcarboxy]benzoesäureester.
(4- [4-(4-Dimethylphenylazo)benzoyloxy] phenyl)methyl 2,5-bis[4-(9-acryloyloxynonyloxy)phenylcarboxy]benzoesäureester.
(4-[4-(4-Dimethylphenylazo)benzoyloxy]phenyl)methyl 2,5-bis[4-(10-acryloyloxydecyloxy)phenylcarboxy]benzoesäureester.
(4- [4-(4-Dimethylphenylazo)benzoyloxy] phenyl)methyl 2,5-bis[4-(11-acryloyloxyundecyloxy)phenylcarboxy]benzoesäureester.
(4-[4-(4-Dimethylphenylazo)benzoyloxy]phenyl)methyl 2,5-bis[4-(12-acryloyloxydodecyloxy)phenylcarboxy]benzoesäureester.

### Beispiel 3

Eine Lösung von 0,6 g 2,5-bis[4-(6-Acryloyloxyhexyloxy)phenylcarboxy]benzoesäure, 0,4 g (4-[4-(4-Nitrophenylazo)benzoyloxy]phenoxy)ethanol und 0,04 g 4-Dimethylaminopyridin wird mit 0,2 g N, N'-Dicyclohexyldicarbodiimid und 20 ml Dichlormethan in analoger Weise zu Beispiel 1 zu (4-[4-(4-Nitrophenylazo)benzoyloxy] phenoxy)ethyl 2,5-bis[4-(6-acryloyloxyhexyloxy)phenylcarboxy]benzoesäureester umgesetzt.

Das als Ausgangsmatrial verwendete (4-[4-(4-Nitrophenylazo)benzoyloxy]phenoxy)ethanol wird wie folgt hergestellt:
(a) Eine Lösung von 0,35 g 4-(4-Nitrophenylazo)benzoesäure, 0,2 g (4-Hydroxyphenoxy)ethanol und 0,04 g 4-Dimethylaminopyridin wird mit 0,4 g N,N'-Dicyclohexyldicarbodiimid und 50 ml Dichlormethan in analoger Weise zu Beispiel 1 zu 0,4 g (4-[4-(4-Nitrophenylazo)benzoyloxy]phenoxy)ethanol umgesetzt.

In analoger Weise können folgende Verbindungen hergestellt werden:
(4-[4-(4-Nitrophenylazo)benzoyloxy]phenoxy)ethyl 2,5-bis[4-(7-acryloyloxyheptyloxy)phenylcarboxy]benzoesäureester.
(4-[4-(4-Nitrophenylazo)benzoyloxy]phenoxy)ethyl 2,5-bis(4-[8-acryloyloxyoctyloxy)phenylcarboxy]benzoesäureester.
(4-[4-(4-Nitrophenylazo)benzoyloxy] phenoxy)ethyl 2,5-bis[4-(9-acryloyloxynonyloxy)phenylcarboxy]benzoesäureester.
(4-[4-(4-Nitrophenylazo)benzoyloxy]phenoxy)ethyl 2,5-bis[4-(10-acryloyloxydecyloxy)phenylcarboxy]benzoesäureester.
(4-[4-(4-Nitrophenylazo)benzoyloxy] phenoxy)ethyl 2,5-bis [4-(11-acryloyloxyundecyloxy)phenylcarboxy]benzoesäureester.
(4-[4-(4-Nitrophenylazo)benzoyloxy]phenoxy)ethyl 2,5-bis [4-(12-acryloyloxydodecyloxy)phenylcarboxy]benzoesäureester.
(4- [4-(4-Dimethylphenylazo)benzoyloxy]phenoxy)ethyl 2,5-bis[4-(6-acryloyloxyhexyloxy)phenylcarboxy]benzoesäureester.
(4-[4-(4-Dimethylphenylazo)benzoyloxy]phenoxy)ethyl 2,5-bis [4-(7-acryloyloxyheptyloxy)phenylcarboxy]benzoesäureester.
(4-[4-(4-Dimethylphenylazo)benzoyloxy]phenoxy)ethyl 2,5-bis[4-(8-acryloyloxyoctyloxy)phenylcarboxy]benzoesäureester.
(4-[4-(4-Dimethylphenylazo)benzoyloxy]phenoxy)ethyl 2,5-bis[4-(9-acryloyloxynonyloxy)phenylcarboxy]benzoesäureester.
(4-[4-(4-Dimethylphenylazo)benzoyloxy]phenoxy)ethyl 2,5-bis[4-(10-acryloyloxydecyloxy)phenylcarboxy]benzoesäureester.
(4-[4-(4-Dimethylphenylazo)benzoyloxy]phenoxy)ethyl 2,5-bis[4-(11-acryloyloxyundecyloxy)phenylcarboxy]benzoesäureester.
(4-[4-(4-Dimethylphenylazo)benzoyloxy]phenoxy)ethyl 2,5-bis[4-(12-acryloyloxydodecyloxy)phenylcarboxy]benzoesäureester.

### Beispiel 4

Ein Gemisch aus 95 Gew.% Pentyl 2,5-bis[4-(6-acryloyloxyhexyloxy)phenylcarboxy]benzoesäureester und 5 Gew.% 6-[4-(4-Nitrophenylazo)phenoxy]hexyl 2,5-bis[4-(6-acryloyloxyhexyloxy)phenylcarboxy]benzoesäureester wurde vorgelegt, mit 1 Gew.% eines Photoinitiators (IRGACURE, Ciba Geigy) versetzt, in Anisol gelöst (20 Gew.%) und dann bei 2000 Umdrehungen pro Minute auf eine Glasplatte geschleudert. Die Glasplatte wurde zuvor mit Poly[methacryloyloxyethyl-3-(E)-[4-cyano-4'-biphenyl]acrylat] beschichtet und mit linear polarisiertem Licht bestrahlt. Dabei wurde eine vorgegebene Struktur mittels einer Maske in die (PPN) Schicht photolithographisch eingeschrieben. Die neue Schicht (auf der PPN Schicht) wurde bei 90°C auf einer Wärmebank getrocknet, dann im Vakuumschank unter Vakuum bei 90°C mit Xenon-licht belichtet. Die eingeschriebene Originalstruktur blieb erhalten und wurde vom neuen Netzwerk getreu übernommen. Eine klare dichroiitische Absorption (orange) war erkennbar. Diese Schicht kann als strukturierter Absorptionsfilter verwendet werden.

## Patentansprüche

1. Verbindungen der allgemeinen Formel 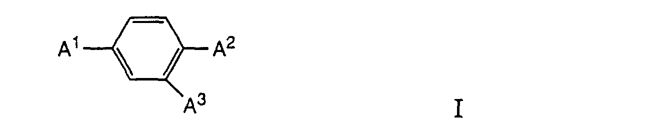 worin
A¹ und A² je einen vernetzbaren, mesogenen Rest; und
A³ einen dichroitischen Rest darstellen.

2. Verbindungen nach Anspruch 1, worin die mesogenen Reste A¹ und A² der allgemeinen Formel 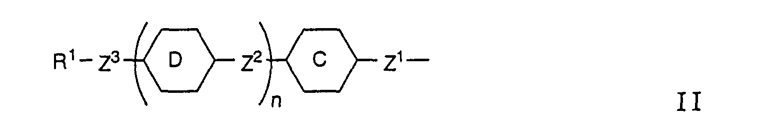 bedeuten, worin
Ringe C und D unabhängig voneinander gegebenenfalls mit Halogen, Methyl und/oder Cyano substituiertes 1,4-Phenylen oder Pyridin-2,5-diyl, Pyrimidin-2,5-diyl, trans-1,4-Cyclohexylen oder trans-1,3-Dioxan-2,5-diyl;
Z¹ -CH₂CH₂-, -CH₂O-, -COO-, -OOC-, -(CH₂)₄- oder -(CH₂)₃O-;
Z² eine Einfachbindung, -CH₂CH₂-, -CH₂O-, -OCH₂-, -COO-, -OOC-, -(CH₂)₄-, -O(CH₂)₃- oder -(CH₂)₃O-;
Z³ -(CY₂)ₘ-, -O(CY₂)ₘ-, -(CY₂)ₘO-, -(CY₂)ₘCOO-, -(CY₂)ₘOOC-, -(Si[(CH₃)₂]O)ₘ-, -OCH₂(Si[(CH₃)₂]O)ₘSi[(CH₃)₂]CH₂O-, oder -NHCH₂(Si[(CH₃)₂]O)ₘSi[(CH₃)₂]CH₂NH-;
Y Wasserstoff oder Fluor;
n 0 oder 1;
m eine ganze Zahl von 1 bis 16; und
R¹ eine vernetzbare Gruppe wie Ethylen, Acrylat, Methacrylat, 2-Chloracrylat, 2-Phenylacrylat, Acryloylphenylen, Acrylamid, Methacrylamid, 2-Chloracrylamid, 2-Phenylacrylamid, Epoxy, Itaconsäureester, Vinylether, Vinylester, Styrol-Derivate, Siloxane, Ethylenimin-Derivate, Maleinsäure-Derivate, Fumarsäure-Derivate oder ein gegebenenfalls mit Methyl, Methoxy, Cyano und/oder Halogen substituiertes Zimtsäure-Derivat bedeuten

3. Verbindungen nach Anspruch 2, worin die mesogenen Reste A¹ und A² die gleiche Bedeutung haben.

4. Verbindungen gemäss Anspruch 1, 2 oder 3, **dadurch gekennzeichnet, dass** der dichroitische Rest A³ einen Rest der allgemeinen Formel 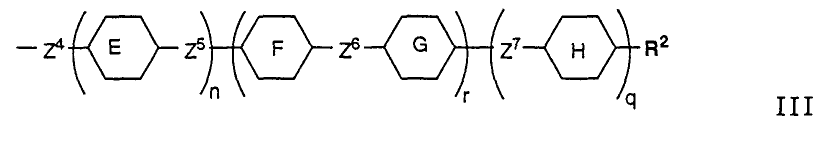 bedeutet, worin
Ringe E und H unabhängig voneinander gegebenenfalls mit Halogen, Methyl und/oder Cyano substituiertes 1,4-Phenylen, oder Pyridin-2,5-diyl, Pyrimidin-2,5-diyl, trans-1,4-Cyclohexylen oder trans-1,3-Dioxan-2,5-diyl;
Ring F gegebenenfalls mit Halogen, Methyl und/oder Cyano substituiertes 1,4-Phenylen, oder Pyridin-2,5-diyl oder Pyrimidin-2,5-diyl;
Ring G gegebenenfalls mit Halogen, Methyl, Dimethylamino, Amino, Nitro und/oder Cyano einfach oder mehrfach substituiertes 1,4-Phenylen, oder Pyridin-2,5-diyl, Pyrimidin-2,5-diyl, 1,4-Naphthylen, 2,6-Naphthylen, 2,5-Pyrazoldiyl, 2,5-Thiazoldiyl, 2,5-Benzthiazoldiyl, 2,5-Imidazoldiyl, 2,5-Pyrroldiyl oder 2,5-Thiophendiyl;
Z⁴ -CH₂CH₂-, -CH₂O-, -COO-, -OOC-, -(CH₂)₄-, -(CH₂)₃O-, -COO(CH₂)ₚ- oder -COO(CH₂)ₚO-;
Z⁵ und Z⁷ unabhängig voneinander eine Einfachbindung, -CH₂CH₂-, -CH₂O-, -OCH₂-, -COO-, -OOC-, -(CH₂)₄-, -O(CH₂)₃- oder-(CH₂)₃O-;
Z⁶ -N=N-, -N(O)=N-, -CH=CH- oder -CH=N-;
n und q je 0 oder 1;
p eine ganze Zahl von 1 bis 16;
r 0, 1 oder 2; und
R² Wasserstoff, Halogen, Cyano, -CH=CHNO₂, -CH=CHCN, -CH=C(CN)₂, Nitro, eine Dialkylamino- oder Cyclobutylamino-Gruppe oder eine gegebenenfalls mit Methoxy, Cyano und/oder Halogen substituierte Alkyl, Alkoxy- oder Alkanoyloxy-Gruppe bedeuten, mit der Massgabe, dass, wenn r = 0 ist, R² einen substituierten Anthrachinonrest der allgemeinen Formel 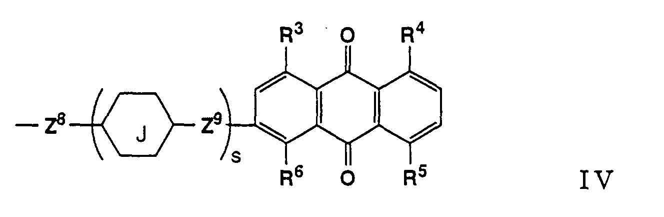
bedeutet, worin
Ring J gegebenenfalls mit Halogen, Methyl und/oder Cyano substituiertes 1,4-Phenylen, oder Pyridin-2,5-diyl, Pyrimidin-2,5-diyl, trans-1,4-Cyclohexylen oder trans-1,3-Dioxan-2,5-diyl;
Z⁸ -CH₂CH₂-, -CH₂O-, -COO-, -OOC-, -(CH₂)₄-, -(CH₂)₃O-, -COO(CH₂)ₚ- oder -COO(CH₂)ₚO-;
Z⁹ eine Einfachbindung, -COO(CH₂)ₚN(CH₃)-, -COO(CH₂)ₚNH-, -CH₂O-, -OCH₂-, -COO-, -OOC- oder -NH-;
s 0 oder 1;
p eine ganze Zahl von 1 bis 16; und
R³, R⁴, R⁵ und R⁶ unabhängig voneinander Wasserstoff, Halogen, Cyano, -CH=CHNO₂, -CH=CHCN, -CH=C(CN)2, Nitro, Hydroxy, eine Dialkylamino- oder Cyclobutylamino-gruppe oder eine gegebenenfalls mit Methyl, Methoxy, Cyano und/oder Halogen substituierte Alkyl, Alkoxy- oder Alkanoyloxy-gruppe bedeuten.

5. Verbindungen gemäss Anspruch 1, 2 oder 3, **dadurch gekennzeichnet, dass** der dichroitische Rest A³ einen Rest der allgemeinen Formel 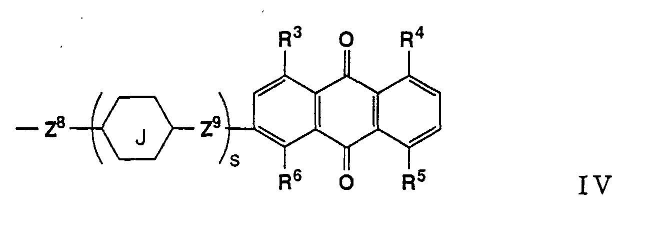 bedeutet, worin
Ring J gegebenenfalls mit Halogen, Methyl und/oder Cyano substituiertes 1,4-Phenylen, oder Pyridin-2,5-diyl, Pyrimidin-2,5-diyl, trans-1,4-Cyclohexylen oder trans-1,3-Dioxan-2,5-diyl;
Z⁸ -CH₂CH₂-, -CH₂O-, -COO-, -OOC-, -(CH₂)₄-, -(CH₂)₃O-, -COO(CH₂)ₚ- oder -COO(CH₂)ₚO-;
Z⁹ eine Einfachbindung, -COO(CH₂)ₚN(CH₃)-, -COO(CH₂)ₚNH-, -CH₂O-, -OCH₂-, -COO-, -OOC- oder -NH-;
s 0 oder 1;
p eine ganze Zahl von 1 bis 16; und
R³, R⁴, R⁵ und R⁶ unabhängig voneinander Wasserstoff, Halogen, Cyano, -CH=CHNO₂, -CH=CHCN, -CH=C(CN)₂, Nitro, Hydroxy, eine Dialkylamino- oder Cyclobutylamino-gruppe oder eine gegebenenfalls mit Methyl, Methoxy, Cyano und/oder Halogen substituierte Alkyl, Alkoxy- oder Alkanoyloxy-gruppe, bedeuten.

6. Verbindungen nach Anspruch 4 oder 5, worin die Reste A¹ und A² einen Rest der allgemeinen Formel 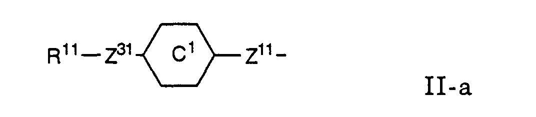 bedeuten, worin
Ring C¹ ein gegebenenfalls mit Fluor substituiertes 1,4-Phenylen;
Z¹¹ -CH₂CH₂-, -CH₂O-, -COO-, -OOC-, -(CH₂)₄- oder -(CH₂)₃O-;
Z³¹ -(CH₂)_{m'}-, -(CH₂)_{m'}O-, -(CH₂)_{m'}COO- oder -(CH₂)_{m'}OOC-;
m' eine ganze Zahl von 4 bis 12; und
R¹¹ Acrylat, Methacrylat, Vinylether oder Epoxy bedeuten.

7. Verbindungen nach einem der Ansprüche 1 bis 6, **dadurch gekennzeichnet, dass** der dichroitische Rest A³ einen Rest der allgemeinen Formel 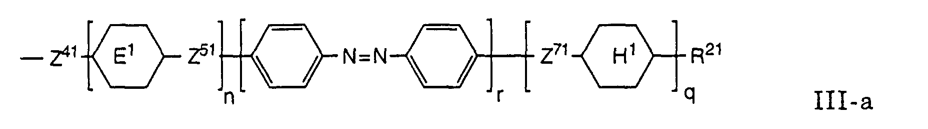 oder 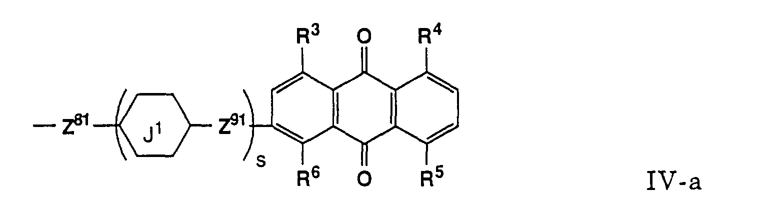 worin
Ringe E¹ und H¹ ein gegebenenfalls mit Fluor substituiertes 1,4-Phenylen;
Z⁴¹ -COO(CH₂)_{p'}- oder -COO(CH)_{p'}O-;
Z⁵¹ und Z⁷¹ unabhängig voneinander eine Einfachbindung, -CH₂CH₂-, -CH₂O-, -COO- oder -OOC-;
n, q 0 oder 1;
r 1;
p' eine ganze Zahl von 4 bis 12 ist;
R²¹ Nitro oder Dimethylamino;
Ring J¹ gegebenenfalls mit Fluor substituiertes 1,4-Phenylen oder trans-1,4-Cyclohexylen;
Z⁸¹ -COO(CH₂)_{p'}- oder -COO(CH₂)_{p'}O-;
Z⁹¹ eine Einfachbindung, -COO(CH₂)ₚN(CH₃)- oder -COO(CH₂)ₚNH- bedeuten;
s 0 oder 1; und
R³, R⁴, R⁵, R⁶ und p die oben angegebenen Bedeutungen haben.

8. Verbindungen der allgemeinen Formel 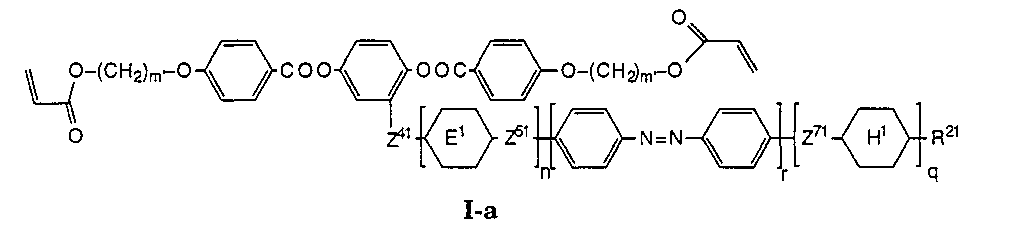 worin
m' eine Zahl von 4 bis 12;
Ringe E¹ und N¹ ein gegebenenfalls mit Fluor substituiertes 1,4-Phenylen;
Z⁴¹ -COO(CH₂)_{p'}- oder -COO(CH₂)_{p'}O-;
Z⁵¹ und Z⁷¹ unabhängig voneinander eine Einfachbindung, -CH₂CH₂-, -CH₂O-, -COO- oder -OOC-;
n, q 0 oder 1;
r 1; und
R²¹ Nitro bedeuten.

9. Verbindungen gemäss Anspruch 8, worin q = 0 ist.

10. Vernetzbare, flüssigkristalline Gemische bestehend aus mindestens 2 Komponenten, wovon mindestens eine Komponente eine Verbindung der in Anspruch 1 definierten Formel I ist.

11. Vernetzbare, flüssigkristalline Gemische gemäss Anspruch 10, **dadurch gekennzeichnet, dass** sie neben einer oder mehreren Verbindungen der Formel I, eine oder mehrere Verbindungen aus der Gruppe der Formeln 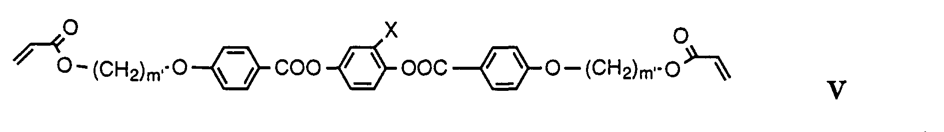 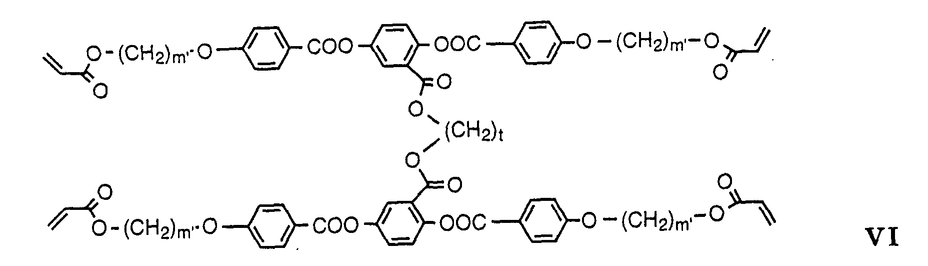 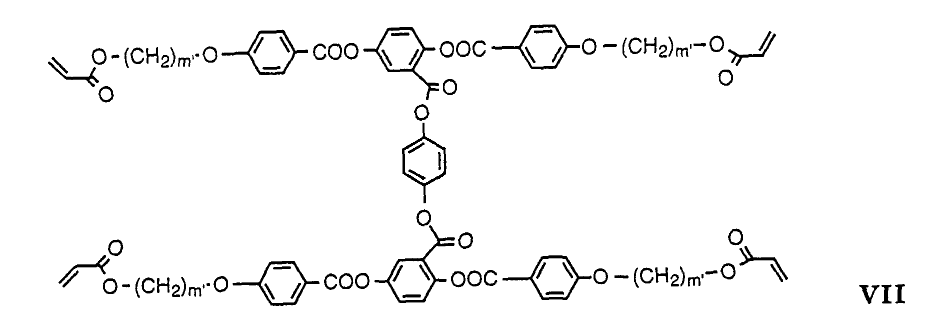 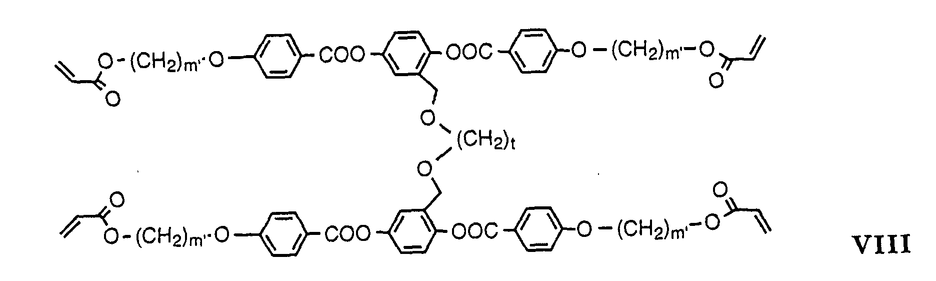 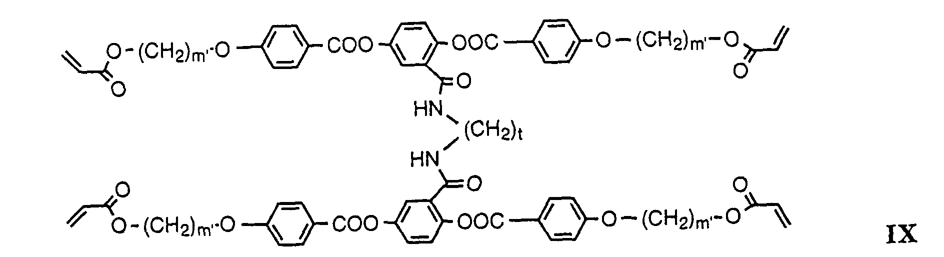 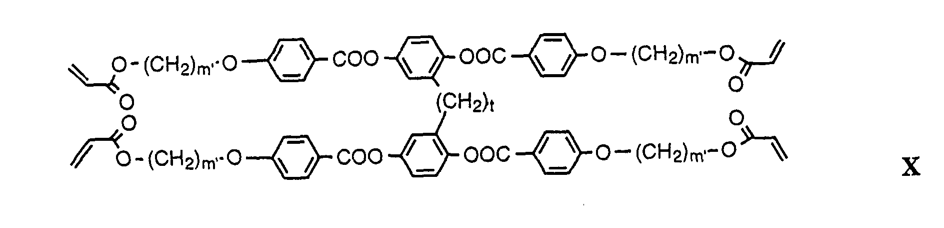 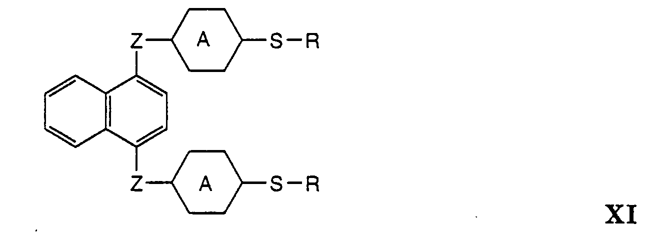 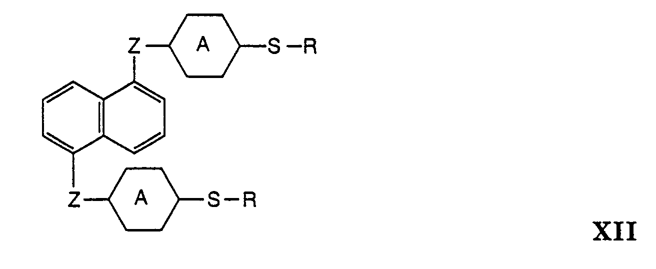 worin
X Wasserstoff, Fluor, Chlor, Brom oder Methyl;
m' eine ganze Zahl von 4 bis 12; und
t eine ganze Zahl von 2 bis 12 ist;
Z -OCH₂- oder -OOC-;
A 1,4-Phenylen oder 2- bzw. 3-Fluor-1,4-phenylen;
S -(CH₂)_{m'}- oder -(CH₂)_{m'}O-; und
R Acrylat, Methacrylat, Vinylether oder Epoxy bedeuten.

12. Verwendung von Verbindungen gemäss einem der Ansprüche 1 bis 9 in ihrem vernetzten Zustand für optische Bauelemente.

13. Verwendung von vernetzbaren flüssigkristallinen Gemischen gemäss einem der Ansprüche 10 oder 11 in ihrem vernetzten Zustand für optische Bauelemente.

## Claims

1. Compounds of the general formula 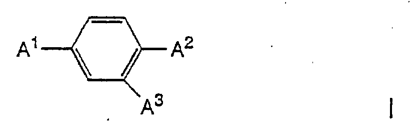 wherein
A¹ and A² each represent a cross-linkable, mesogenic group; and
A³ represents a dichroic group.

2. Compounds according to claim 1, wherein the mesogenic groups A¹ and A² signify a group of the general formula 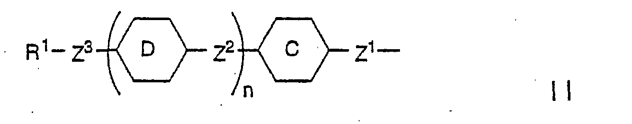 wherein
rings C and D each independently signify 1,4-phenylene, which is optionally substituted with halogen, methyl and/or cyano, or pyridine2,5-diyl, pyrimidine-2,5-diyl, trans-1,4-cyclohexylene or trans-1,3-dioxane-2,5-diyl;
Z¹ signifies -CH₂CH₂-, -CH₂O-, -COO-, -OOC-, -(CH₂)₄- or -(CH₂)₃O-;
Z² signifies a single bond; -CH₂CH₂-; -CH₂O-, -OCH₂-, -COO-, -OOC-, -(CH₂)₄-, -O(CH₂)₃- or -(CH₂)₃O-;
Z³ signifies -(CY₂)ₘ-, -O(CY₂)ₘ-, -(CY₂)ₘO-, -(CY₂)ₘCOO-, -(CY₂)ₘOOC-, -(Si[(CH₃)₂]O)ₘ-, -OCH₂(Si[(CH₃)₂]O)ₘ- Si[(CH₃)₂]CH₂O- or -NHCH₂(Si[(CH₃)₂]O)ₘ- Si[(CH₃)₂]CH₂NH-;
Y signifies hydrogen or fluorine;
n signifies 0 or 1;
m signifies a whole number of 1 to 16; and
R¹ signifies a cross-linkable group such as ethylene, acrylate, methacrylate, 2-chloroacrylate, 2-phenylacrylate, acryloylphenylene, acrylamide, methacrylamide, 2-chloroacrylamide, 2-phenylacrylamide, epoxy, itaconic acid ester, vinyl ether, vinyl ester, styrene derivative, siloxane, ethyleneimine derivative, maleic acid derivative, fumaric acid derivative or a cinnamic acid derivative, which is optionally substituted with methyl, methoxy, cyano and/or halogen.

3. Compounds according to claim 2, wherein the mesogenic groups A¹ and A² have the same significance.

4. Compounds according to claim 1, 2 or 3, wherein the dichroic group A³ signifies a group of the general formula 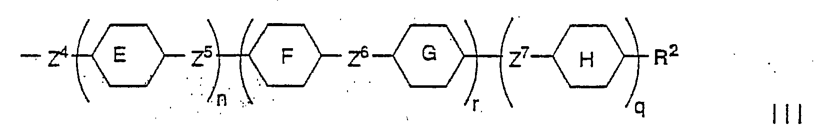 wherein
rings E and H each independently signify 1,4-phenylene, which is optionally substituted with halogen, methyl and/or cyano, or pyridine-2,5-diyl, pyrimidine-2,5-diyl, trans-1,4-cyclohexylene or trans-1,3-dioxane-2,5-diyl;
ring F signifies 1,4-phenylene, which is optionally substituted with halogen, methyl and/or cyano, or pyridine-2,5-diyl or pyrimidine-2,5-diyl;
ring G signifies 1,4-phenylene, which is option-ally mono- or multiply-substituted with halogen, methyl, dimethylamino, amino, nitro and/or cyano, or pyridine-2,5-diyl, pyrimidine-2,5-diyl, 1,4-naphthylene, 2,6-naphthylene, 2,5-pyrazolediyl, 2,5-thiazolediyl, 2,5-benzthiazolediyl, 2,5-imidazolediyl, 2,5-pyrrolediyl or 2,5-thiophenediyl;
Z⁴ signifies -CH₂CH₂-, -CH₂O-, -COO-, -OOC-, -(CH₂)₄-, -(CH₂)₃O-, -COO(CH₂)ₚ- or -COO(CH₂)ₚO-;
Z⁵ and Z⁷ each independently signify a single bond, -CH₂CH₂-, -CH₂O-, -OCH₂-, -COO-, -OOC-, -(CH₂)₄-, -O(CH₂)₃- or -(CH₂)₃O-;
Z⁶ signifies -N=N-, -N(O)=N-, -CH=CH- or -CH=N-;
n and q each signify 0 or 1;
p signifies a whole number of 1 to 16;
r signifies 0, 1 or 2; and
R² signifies hydrogen, halogen, cyano, -CH=CHNO₂, -CH=CHCN, -CH=C(CN)₂, nitro, a dialkylamino or cyclobutylamino group or an alkyl, alkoxy or alkanoyloxy group, which is optionally substituted with methoxy, cyano and/or halogen, with the proviso that, when r = 0, R² signifies a substituted anthraquinone group of the general formula 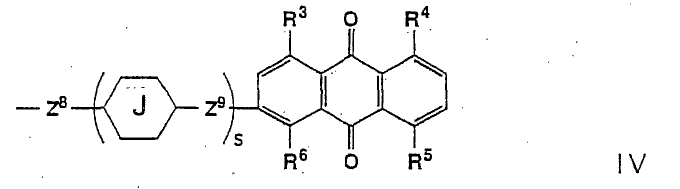
wherein
ring J signifies 1,4-phenylene, which is optionally substituted with halogen, methyl and/ or cyano, or pyridine-2,5-diyl, pyrimidine2,5-diyl, trans-1,4-cyclohexylene or trans-1,3-dioxane-2,5-diyl;
Z⁸ signifies -CH₂CH₂-, -CH₂O-, -COO-, -OOC-, -(CH₂)₄-, -(CH₂)₃O-, -COO(CH₂)ₚ- or -COO(CH₂)ₚO-;
Z⁹ signifies a single bond, -COO(CH₂)ₚN(CH₃)-, -COO(CH₂)ₚNH-, -CH₂O-, -OCH₂-, -COO-, -OOC- or -NH-;
s signifies 0 or 1;
p signifies a whole number of 1 to 16; and
R³,R⁴,R⁵ and R⁶ each independently signify hydrogen, halogen, cyano, -CH=CHNO₂, -CH=CHCN, -CH=C(CN)₂, nitro, hydroxy, a dialkylamino or cyclobutylamino group or an alkyl, alkoxy or alkanoyloxy group, which is optionally substituted with methyl, methoxy, cyano and/or halogen.

5. Compounds according to claim 1, 2 or 3, wherein the dichroic group A³ signifies a group of the general formula 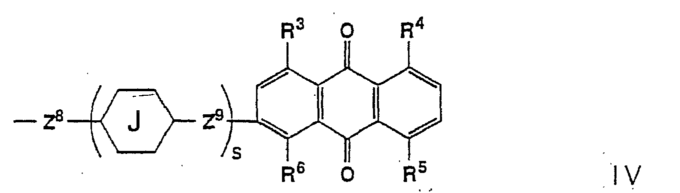 wherein
ring J signifies 1,4-phenylene, which is optionally substituted with halogen, methyl and/ or cyano, or pyridine-2,5-diyl, pyrimidine-2,5-diyl, trans-1,4-cyclohexylene or trans-1 ,3-dioxane-2,5-diyl;
Z⁸ signifies -CH₂CH₂-, -CH₂O-, -COO-, -OOC-, -(CH₂)₄-, -(CH₂)₃O-, -COO(CH₂)ₚ- or -COO(CH₂)ₚO-;
Z⁹ signifies a single bond, -COO(CH₂)ₚN(CH₃)-, -COO(CH₂)ₚNH-, -CH₂O-, -OCH₂-, -COO-, -OOC- or -NH-;
s signifies 0 or 1;
p signifies a whole number of 1 to 16; and
R³,R⁴,R⁵ and R⁶ each independently signify hydrogen, halogen, cyano, -CH=CHNO₂, -CH=CHCN, -CH=C(CN)₂, nitro, hydroxy, a dialkylamino or cyclobutylamino group or an alkyl, alkoxy or alkanoyloxy group, which is optionally substituted with methyl, methoxy, cyano and/or halogen.

6. Compounds according to claim 4 or 5, wherein the groups A¹ and A² signify a group of the general formula 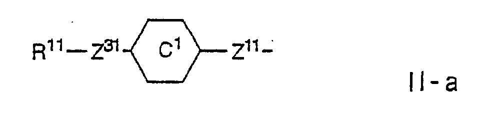 wherein
ring C¹ signifies 1,4-phenylene, which is optionally substituted with fluorine;
Z¹¹ signifies -CH₂CH₂-, -CH₂O-, -COO-, -OOC-, -(CH₂)₄- or -(CH₂)₃O-;
Z³¹ signifies -(CH₂)_{m'}-, -(CH₂)_{m'}O-, -(CH₂)_{m'}COO- or -(CH₂)_{m'}OOC-;
m' signifies a whole number of 4 to 12; and
R¹¹ signifies acrylate, methacrylate, vinyl ether or epoxy.

7. Compounds according to any one of claims 1 to 6, wherein the dichroic group A³ signifies group of the general formula 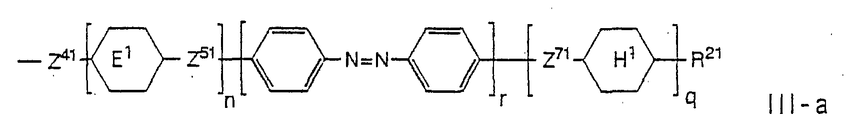 or 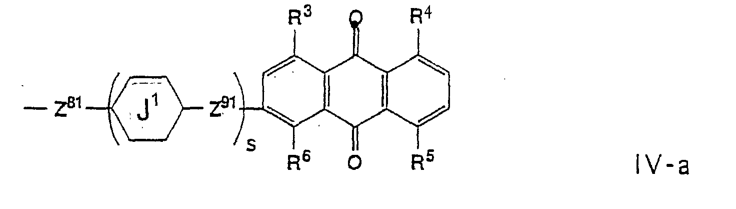 wherein
rings E¹ and H¹ signify 1,4-phenylene, which is optionally substituted with fluorine;
Z⁴¹ signifies -COO(CH₂)_{p'}- or -COO(CH₂)_{p'}O-;
Z⁵¹ and Z⁷¹ each independently signify a single bond, -CH₂CH₂-,-CH₂O-,-COO- or -OOC-;
n, q signify 0 or 1;
r signifies 1;
p' signifies a whole number of 4 to 12;
R²¹ signifies nitro or dimethylamino;
ring J¹ signifies 1,4-phenylene, which is optionally substituted with fluorine, or trans-1,4-cyclohexylene;
Z⁸¹ signifies -COO(CH₂)_{p'}- or -COO(CH₂)_{p'}O-;
Z⁹¹ signifies a single bond, -COO(CH₂)ₚN(CH₃)- or -COO(CH₂)ₚNH-;
s signifies 0 or 1; and
R³,R⁴,R⁵,R⁶ and p have the significances given above.

8. Compounds of the general formula 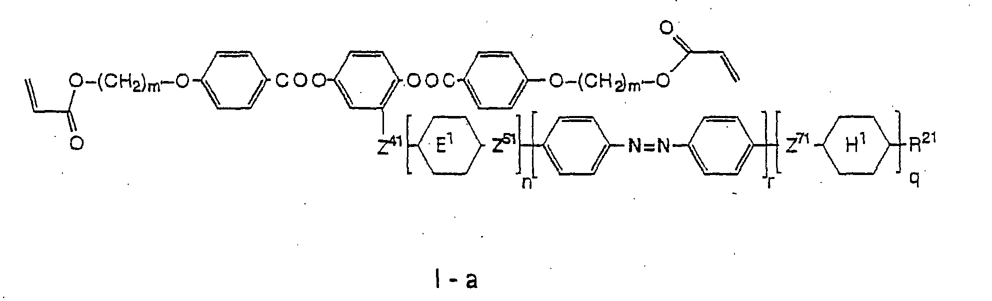 wherein
m' signifies a number of 4 to 12;
rings E¹ and N¹ signify 1,4-phenylene, which is optionally substituted with fluorine,
Z⁴¹ signifies -COO(CH₂)_{p'}- or -COO(CH₂)_{p'}O-;
Z⁵¹ and Z⁷¹ each independently signify a single bond, -CH₂CH₂-, -CH₂O-, -COO- or -OOC-;
n, q signify 0 or 1;
r signifies 1; and
R²¹ signifies nitro.

9. Compounds according to claim 8, wherein q signifies 0.

10. A cross-linkable, liquid crystalline mixture consisting of at least 2 components, of which at least one component is a compound of formula I defined in claim 1.

11. A cross-linkable, liquid crystalline mixture according to claim 10, **characterized in that** it contains, in addition to one or more compounds of formula I, one or more compounds from the group of the formulae 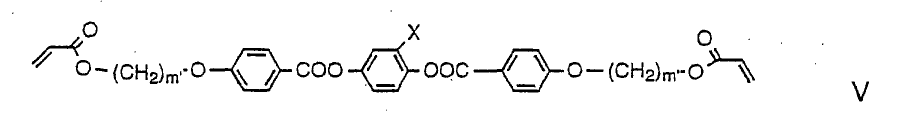 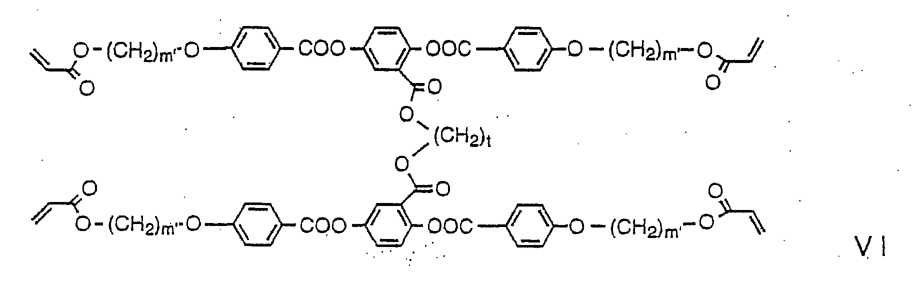 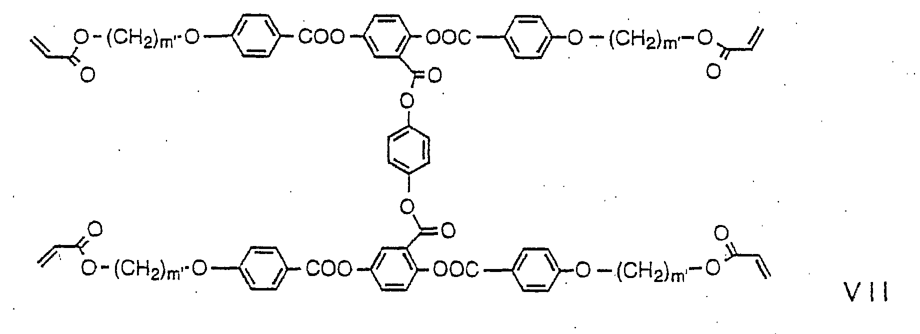 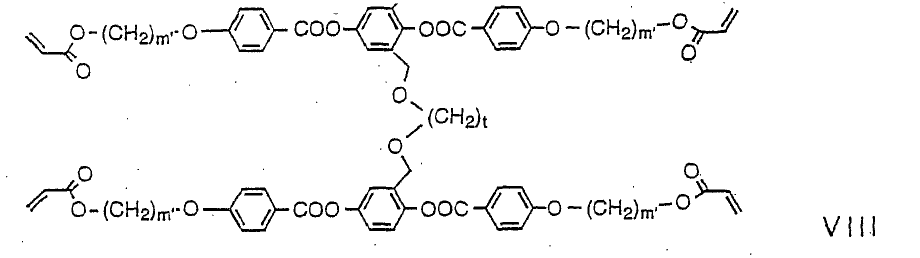 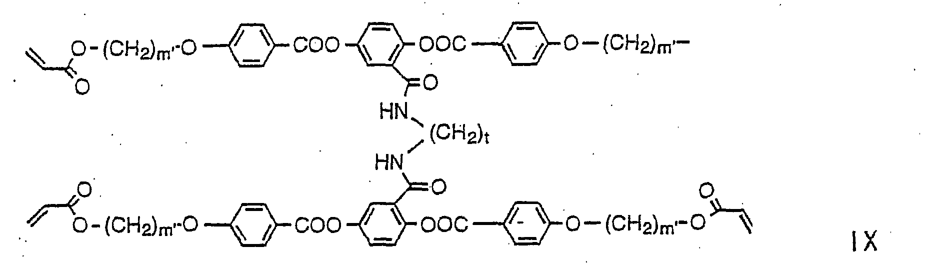 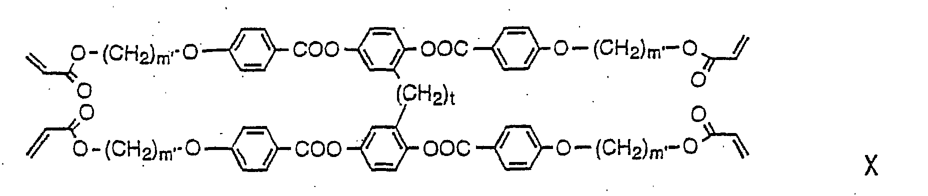 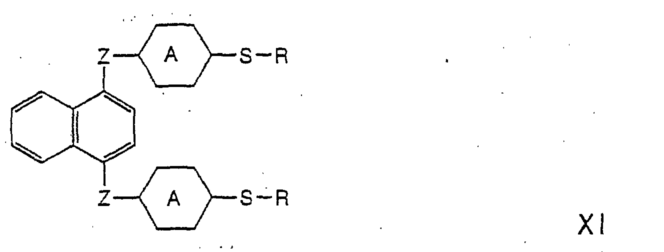 and 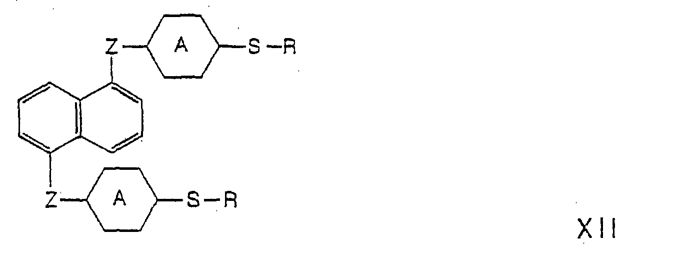 wherein
X is hydrogen, fluorine, chlorine, bromine or methyl
m' is a whole number of 4 to 12; and
t is a whole number of 2 to 12;
Z signifies -OCH₂- or -OOC-;
A signifies 1,4-phenylene or 2- or 3-fluoro-1,4-phenylene;
S signifies -(CH₂)_{m'}- or -(CH₂)_{m'}O-; and
R signifies acrylate, methacrylate, vinyl ether or epoxy.

12. The use of compounds according to any one of claims 1 to 9 in their cross-linked state for optical components.

13. The use of cross-linkable liquid crystalline mixtures according to claim 10 or 11 in their cross-linked state for optical components.

## Revendications

1. Composés de la formule générale 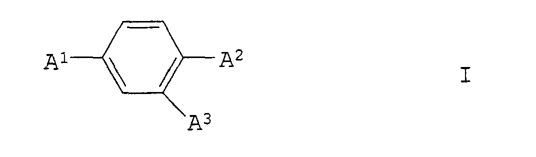 dans laquelle :
A¹ et A² représentent chacun un résidu mésogène réticulable ; et
A³ représente un résidu dichroïque.

2. Composés selon la revendication 1, dans lesquels les résidus mésogènes A¹ et A² sont représentés par la formule générale 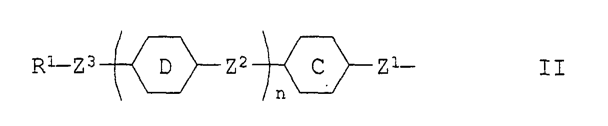 dans laquelle :
les noyaux C et D sont indépendamment l'un de l'autre un groupe 1,4-phénylène, le cas échéant substitué par un halogène, méthyle et/ou cyano, ou bien un groupe pyridine-2,5-diyle, pyrimidine-2,5-diyle, trans-1,4-cyclohexylène ou trans-1,3-dioxane-2,5-diyle ;
Z¹ est -CH₂CH₂-, -CH₂O-, -COO-, -OOC-, - (CH₂)₄- ou -(CH₂)₃O- ;
Z² est une liaison simple, -CH₂CH₂-, -CH₂O-, -OCH₂-, -COO-, -OOC-, -(CH₂)₄-, -O(CH₂)₃- ou -(CH₂)₃O- ;
Z³ est -(CY₂)ₘ-, -O(CY₂)ₘ-, -(CY₂)ₘO-, -(CY₂)ₘCOO-, -(CY₂)ₘOOC, -(Si[(CH₃)₂]O)ₘ-, -OCH₂(Si[(CH₃)₂]O)ₘSi-[(CH₃)₂]CH₂O- ou -NHCH₂(Si[(CH₃)₂]O)Siₘ[(CH₃)₂]CH₂NH ;
Y est hydrogène ou fluor ;
n vaut 0 ou 1 ;
m est un nombre entier valant de 1 à 16 ; et
R¹ est un groupe réticulable tel que l'éthylène, un acrylate, un méthacrylate, un 2-chloroacrylate, un 2-phénylacrylate, un acryloylphénylène, un acrylamide, un méthacrylamide, un 2-chloroacrylamide, un 2-phénylacrylamide, un époxy, un ester de l'acide itaconique, un éther de vinyle, un ester de vinyle, des dérivés de styrène, des siloxanes, des dérivés d'éthylène imine, des dérivés de l'acide maléique, des dérivés de l'acide fumarique ou un dérivé de l'acide cinnamique le cas échéant substitué par un groupe méthyle, méthoxy, cyano et/ou halogène.

3. Composés selon la revendication 2, dans lesquels les résidus mésogènes A¹ et A² ont la même signification.

4. Composés selon la revendication 1, la revendication 2 ou la revendication 3, **caractérisés en ce que** le résidu dichroïque A³ est un résidu de la formule générale 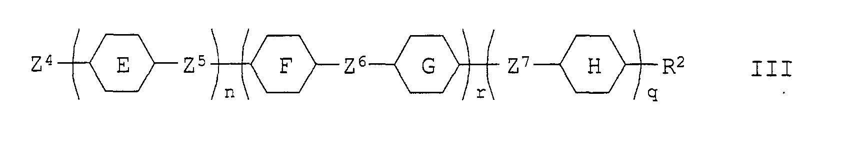 dans laquelle :
les noyaux E et H sont indépendamment l'un de l'autre un groupe 1,4-phénylène, le cas échéant substitué par un halogène, méthyle et/ou cyano, ou bien un groupe pyridine-2,5-diyle, pyrimidine-2,5-diyle, trans-1,4-cyclohexylène ou trans-1,3-dioxane-2,5-diyle ;
le noyau F est un groupe 1,4-phénylène, le cas échéant substitué par un halogène, méthyle et/ou cyano, ou bien un groupe pyridine-2,5-diyle ou pyrimidine-2,5-diyle ;
le noyau G est un groupe 1,4-phénylène, le cas échéant unisubstitué ou plurisubstitué par un halogène, méthyle, diméthylamino, amino, nitro et/ou cyano, ou bien un groupe pyridine-2,5-diyle, pyrimidine-2,5-diyle, 1,4-naphtylène, 2,6-naphtylène, 2,5-pyrazolediyle, 2,5-thiazolediyle, 2,5-benzthiazolediyle, 2,5-imidazolediyle, 2,5-pyrrolediyle ou 2,5-thiophènediyle ;
Z⁴ est -CH₂CH₂-, -CH₂O-, -COO-, -OOC-, -(CH₂)₄-, -(CH₂)₃O-,-COO(CH₂)ₚ- ou -COO(CH₂)ₚO- ;
Z⁵ et Z⁷ sont indépendamment l'un de l'autre une liaison simple, -CH₂CH₂-, -CH₂O-, -OCH₂-, -COO-, -OOC-, -(CH₂)₄-, -O(CH₂)₃- ou -(CH₂)₃O- ;
Z⁶ est -N=N-, -N(O)=N-, -CH=CH- ou -CH=N- ;
n et q valent chacun 0 ou 1 ;
p est un nombre entier valant de 1 à 16 ;
r vaut 0, 1 ou 2 ; et
R² est hydrogène, halogène, cyano, -CH=CHNO₂,
-CH=CHCN, -CH=C(CN)₂, nitro, un groupe dialkylamino ou cyclobutylamino ou un groupe alkyle, alcoxy ou alcanoyloxy le cas échéant substitué par un méthoxy, cyano et/ou halogène,
à la condition que, lorsque r vaut 0, R² est un résidu anthraquinone de la formule générale 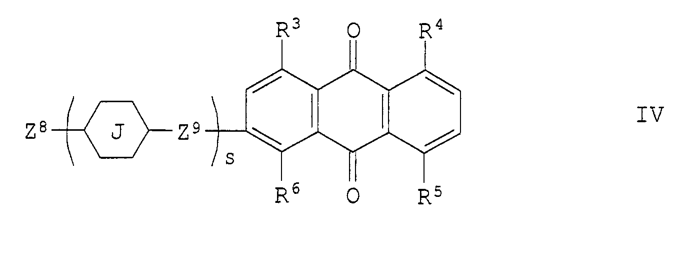
dans laquelle :
le noyau J est un groupe 1,4-phénylène, le cas échéant substitué par un halogène, méthyle et/ou cyano, ou bien un groupe pyridine-2,5-diyle, pyrimidine-2,5-diyle, trans-1,4-cyclohexylène ou trans-1,3-dioxane-2,6-diyle ;
Z⁸ est -CH₂CH₂-, -CH₂O-, -COO-, -OOC-, -(CH₂)₄-, -(CH₂)₃O-, -COO(CH₂)ₚ- ou -COO(CH₂)ₚO- ;
Z⁹ est une liaison simple, -COO(CH₂)ₚN(CH₃)-, -COO(CH₂)ₚNH-, -CH₂O-, -OCH₂-, -COO-, -OOC- ou -NH-,
s vaut 0 ou 1 ;
p est un nombre entier valant de 1 à 16 ; et
R³, R⁴, R⁵ et R⁶ sont indépendamment les uns des autres hydrogène, halogène, cyano, -CH=CHNO₂, -CH=CHCN-, -CH=C(CN)₂, nitro, hydroxy, un groupe dialkylamino ou cyclobutylamino ou un groupe alkyle, alcoxy ou alcanoyloxy le cas échéant substitué par un méthyle, méthoxy, cyano et/ou halogène.

5. Composés selon la revendication 1, la revendication 2 ou la revendication 3, **caractérisés en ce que** le résidu dichroïque A³ est un résidu de la formule générale 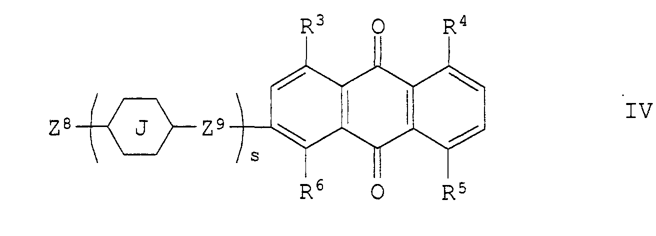 dans laquelle :
le noyau J est un groupe 1,4-phénylène, le cas échéant substitué par un halogène, méthyle et/ou cyano, ou bien un groupe pyridine-2,5-diyle, pyrimidine-2,5-diyle, trans-1,4-cyclohexylène ou trans-1,3-dioxane-2,5-diyle ;
Z⁸ est -CH₂CH₂-, -CH₂O-, -COO-, -OOC-, -(CH₂)₄-, -(CH₂)₃O-, -COO(CH₂)ₚ- ou -COO(CH₂)ₚO- ;
Z⁹ est une liaison simple, -COO(CH₂)ₚN(CH₃)-, -COO(CH₂)ₚNH-, -CH₂O-, -OCH₂-, -COO-, -OOC- ou -NH- ;
s vaut 0 ou 1 ;
p est un nombre entier valant de 1 à 16 ; et
R³, R⁴, R⁵ et R⁶ sont indépendamment les uns des autres hydrogène, halogène, cyano, -CH=CHNO₂, -CH=CHCN-, -CH=C(CN)₂, nitro, hydroxy, un groupe dialkylamino ou cyclobutylamino ou un groupe alkyle, alcoxy ou alcanoyloxy le cas échéant substitué par un méthyle, méthoxy, cyano et/ou halogène.

6. Composés selon la revendication 4 ou la revendication 5, dans laquelle les résidus A¹ et A² représentent un résidu de la formule générale 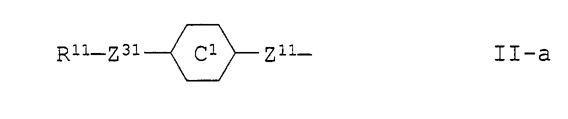 dans laquelle :
le noyau C¹ est un groupe 1,4-phénylène le cas échéant substitué par un fluor ;
Z¹¹ est -CH₂CH₂-, -CH₂O-, -COO-, -OOC, -(CH₂)₄- ou -(CH₂)₃O- ;
Z³¹ est -(CH₂)_{m'}-, -(CH₂)_{m'}O-, -(CH₂)_{m'}COO- ou -(CH₂)_{m'}OOC- ;
m' est un nombre entier valant de 4 à 12 ; et
R¹¹ est un groupe acrylate, méthacrylate, éther de vinyle ou époxy.

7. Composés selon l'une des revendications 1 à 6, **caractérisés en ce que** le résidu dichroïque A³ est un résidu de la formule générale 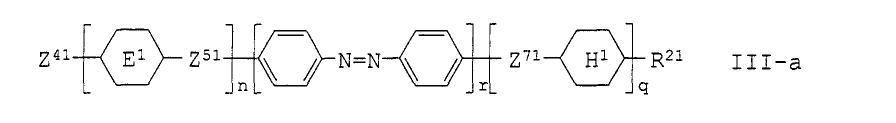 ou 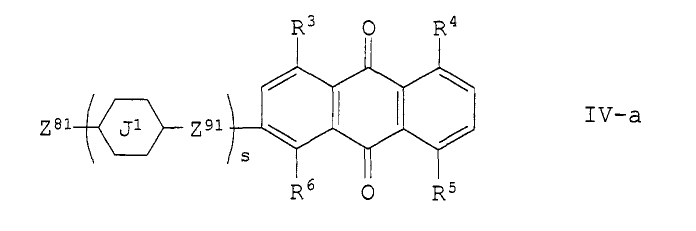 dans laquelle :
les noyaux E¹ et H¹ sont un groupe 1,4-phénylène le cas échéant substitué par un fluor ;
Z⁴¹ est -COO(CH₂)_{p'}- ou -COO(CH₂)_{p'}O- ;
Z⁵¹ et Z⁷¹ sont indépendamment l'un de l'autre une liaison simple, -CH₂CH₂-, -CH₂O-, -COO- ou -OOC- ;
n et q valent 0 ou 1 ;
r vaut 1 ;
p' est un nombre entier valant de 4 à 12 ;
R²¹ est nitro ou diméthylamino ;
le noyau J¹ est un groupe 1,4-phénylène le cas échéant substitué par un fluor ou trans-1,4-cyclohexylène;
Z⁸¹ est -COO(CH₂)_{p'}- ou -COO(CH₂)_{p'}O- ;
Z⁹¹ est une liaison simple, -COO(CH₂)ₚN(CH₃)- ou -COO(CH₂)ₚNH- ;
s vaut 0 ou 1 ; et
R³, R⁴, R⁵, R⁶ et p ont les significations indiquées plus haut.

8. Composés de la formule générale 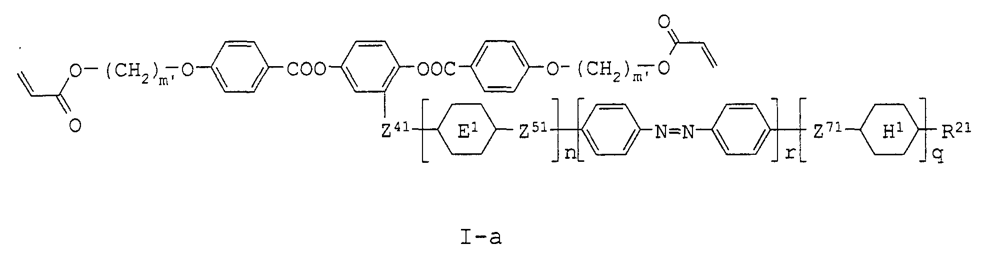 dans laquelle :
m' est un nombre valant de 4 à 12 ;
les noyaux E¹ et N¹ sont un groupe 1,4-phénylène le cas échéant substitué par un fluor ;
Z⁴¹ est -COO(CH₂)_{p'}- ou -COO(CH₂)_{p'}O- ;
Z⁵¹ et Z⁷¹ sont indépendamment l'un de l'autre une liaison simple, -CH₂CH₂-, -CH₂O-, -COO- ou -OOC- ;
n et q valent 0 ou 1 ;
r vaut 1 ; et
R²¹ est un groupe nitro.

9. Composés selon la revendication 8, dans lesquels q vaut 0.

10. Mélanges à cristaux liquides réticulables composés d'au moins 2 composants, l'un au moins de ces composants étant un composé de la formule I définie dans la revendication 1.

11. Mélanges à cristaux liquides réticulables selon la revendication 10, **caractérisés en ce qu'**ils contiennent, outre un ou plusieurs composés de la formule I, un ou plusieurs composés choisis dans le groupe comprenant les formules : 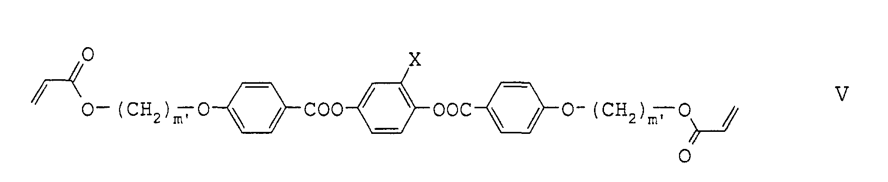 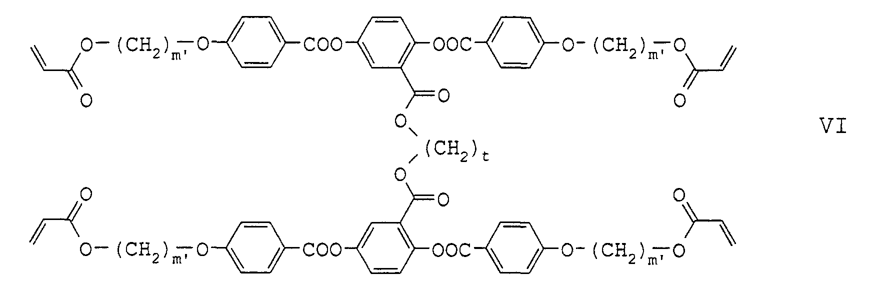 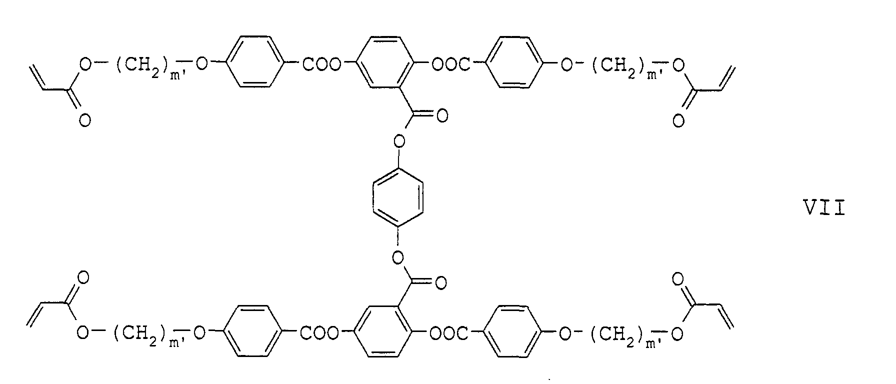 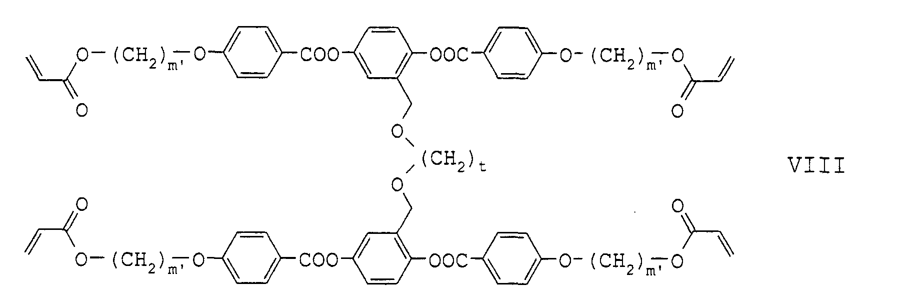 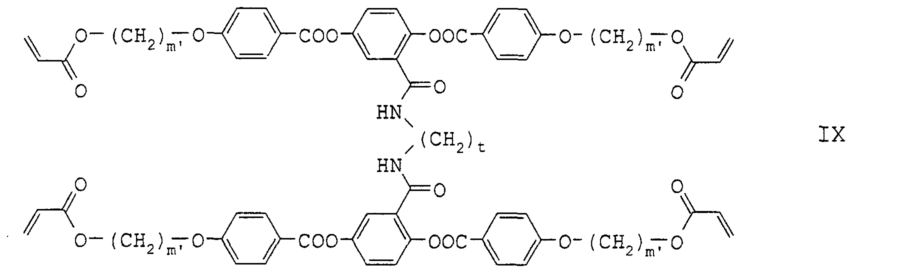 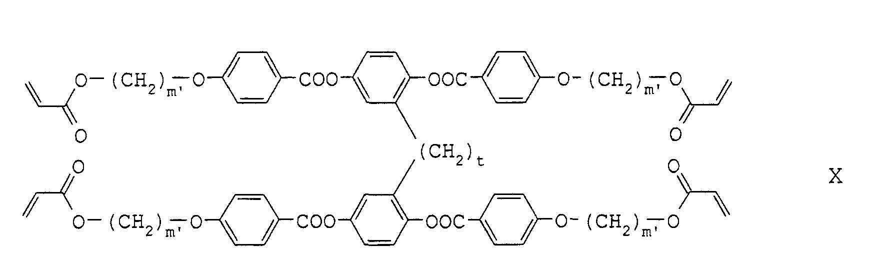 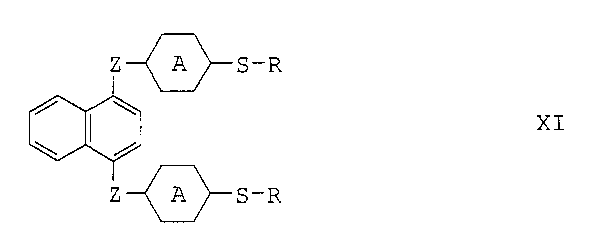 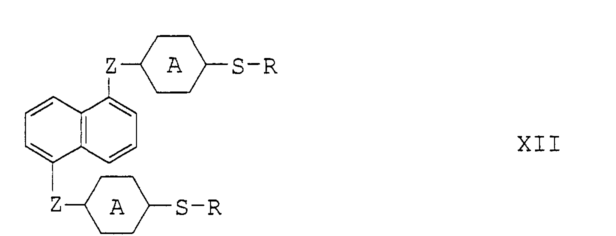 dans lesquelles :
X est hydrogène, fluor, chlore, brome ou méthyle ;
m' est un nombre entier valant de 4 à 12 ; et
t est un nombre entier valant de 2 à 12 ;
Z est -OCH₂- ou -OOC- ;
A est un groupe 1,4-phénylène ou un groupe 2- ou 3-fluoro-1,4-phénylène ;
S est -(CH₂)_{m'}- ou -(CH₂)_{m'}O- ; et
R est un groupe acrylate, méthacrylate, éther de vinyle ou époxy.

12. Utilisation de composés selon l'une des revendications 1 à 9 dans leur état réticulé pour des composants optiques.

13. Utilisation de mélanges à cristaux liquides réticulables selon l'une des revendications 10 ou 11 dans leur état réticulé pour des composants optiques.
